# EUROPEAN PATENT SPECIFICATION

(11) **EP 3 437 492 B1**
(45) Date of publication and mention of the grant of the patent: **11.12.2019**
(21) Application number: 18184955.5
(22) Date of filing: 23.07.2018
(51) Int. Cl.: A23N 7/02

(54) **PEELING DEVICE**
SCHÄLVORRICHTUNG
DISPOSITIF DE PELAGE

(30) Priority: 01.08.2017 JP 2017148945
(43) Date of publication of application: 06.02.2019
(73) Proprietor: Astra Co., Ltd., Fukushima City, Fukushima (JP)
(72) Inventor: ICHIJO, Hirotaka, Fukushima city, Fukushima (JP); ANADA, Masakuni, Fukushima city, Fukushima (JP); SASAHARA, Katsuhito, Fukushima city, Fukushima (JP); KARINO, Takahiro, Fukushima city, Fukushima (JP)
(74) Representative: TBK

(56) References cited:
- CN-A- 106 174 630
- JP-A- 2011 193 750
- US-B1- 6 523 464

## Description

### TECHNICAL FIELD

The present invention relates to a peeling device that is suitable for work such as peeling fruit and vegetables (fruit and vegetables that are provided as subjects to be peeled are hereafter referred to as "fruit and vegetables"), such as apples, oranges, kiwifruit, peaches, and turnips.

### BACKGROUND ART

Since the past, in a process for peeling skin during processing treatment of fruit and vegetables, peeling devices of various configurations have been used to enable the processing treatment to be quickly and easily performed. For example, as devices for efficiently peeling the skin off of a persimmon during the production of dried persimmons, there are the peeling devices disclosed in Patent Literature 1 and Patent Literature 2.

The peeling device disclosed in Patent Literature 1 is a peeling device that peels the skin off of a fruit in a spiral shape, while rotating the fruit around a fruit axis, and an object thereof is to smoothly rotate the fruit. The peeling device is configured such that a fruit, such as a persimmon, that has an approximately circular lateral cross-section perpendicular to the fruit axis is set on a supporting roller unit that includes a plurality of free rollers, and sandwiched from above and below. During peeling, a peeling blade is wedged into the surface of the fruit that is at an attitude at which the fruit axis stands in an upward/downward direction, while the fruit is rotated around the fruit axis. The skin is thereby peeled from the fruit.

In addition, the peeling device disclosed in Patent Literature 2 is configured such that a lateral movement support stand is attached to a main body base such as to freely move in a lateral direction. A vacuum suction rotation mechanism that suctions a stem side of a persimmon by a suction pad and rotates the persimmon is provided in the lateral movement support stand such as to be capable of freely moving upward and downward. In addition, in the peeling device, the suction pad is attached such as to freely tilt, and a full-periphery peeling blade that moves such as to rotate along an outer periphery of the persimmon is attached such as to be positioned below the suction pad, thereby configuring a full-periphery peeling mechanism. The suction pad suctions the periphery of the stem of the persimmon and raises the persimmon. The suction pad is tilted and full-periphery peeling is performed by the full-periphery peeling blade being rotated. Meanwhile, the lateral movement support stand is moved to a discharge shooter side and the skin is dropped in front of the discharge shooter.

Patent Literature 1: JP 2011 193750 A
Patent Literature 2: JP 2011 125299 A

### SUMMARY OF THE INVENTION

### PROBLEM TO BE SOLVED BY THE INVENTION

In the peeling device configured such that a rotation mechanism is disposed below the fruit or vegetable during peeling, as disclosed in Patent Literature 1, problems to be solved, such as processing of peeled skin, are present. That is, in a device in which a mechanism (rotation mechanism) for rotating the fruit or vegetable is positioned below the fruit or vegetable to be peeled, the skin that is peeled during peeling collects on the rotation mechanism. The peeled skin may become caught or entangled in the rotation mechanism and inhibit rotation, or obstruct attachment and detachment, as well as holding, of the fruit or vegetable. In addition, when juice that is produced during peeling drips, the juice may become attached to the rotation mechanism and stick thereto. As a result, a problem arises in that a malfunction may occur in driving of the rotation mechanism and circumstances that are undesirable also in terms of hygiene tend to occur.

In the peeling device disclosed in Patent Literature 2, the object is to facilitate post-processing of peeled skin by a configuration in which the lateral movement support stand is moved to the discharge shooter side and the skin is dropped in front of the discharge shooter. However, the configuration of the overall device is complicated and is not a configuration in which maintenance, such as cleaning, can be easily performed.

An object of the present invention is to provide a peeling device that is capable of continuously peeling a large quantity of fruit or vegetables, in which maintenance, such as cleaning, can be easily performed with a simple configuration, and attachment of a fruit or vegetable to the peeling device, peeling, and recovery are easily, safely, and reliably performed.

### MEANS FOR SOLVING PROBLEM

The object is achieved by a peeling device according to claim 1. Further advantageous developments of the present invention are set out in the dependent claims.

To achieve the above-described object, a peeling device of the present invention includes: a vertical rotation disk that is rotatably provided such as to be freely attached to and detached from a ration shaft that is provided such as to extend horizontally; a plurality of fruit and vegetable holders that are each rotatably provided around a rotation axis of the vertical rotation disk, and each support a fruit or vegetable to be worked in a peelable manner by a support portion that extends vertically in relation to the vertical rotation disk; and a peeler main body that moves along an axial direction (outer periphery) of the fruit or vegetable that is supported by the fruit and vegetable holder in a state in which a peeler blade is pressed against the fruit or vegetable. The vertical rotation disk is rotated and the fruit and vegetable holders are successively intermittently carried to a plurality of work positions including an attachment position for the fruit or vegetable, a peeling position, and a recovery position for the fruit or vegetable provided on a rotation movement path of the vertical rotation disk. At the peeling position, as a result of the carried fruit and vegetable holder being rotated, the supported fruit or vegetable is rotated and full-periphery peeling by the peeler blade is performed by the peeler main body moving along the axial direction (outer periphery) of the fruit or vegetable.

As a result of the configuration in which the support portion of the fruit and vegetable holder extends horizontally from the vertical rotation disk in this way, the peeled skin can be recovered and discarded without collecting on a horizontal rotation disk. In addition, the configuration is such that even should juice drip from the fruit or vegetable, the juice does not easily become attached to mechanisms for rotating the vertical rotation disk and the fruit and vegetable holders. Therefore, problems such as inhibition of rotation-driving and deterioration of hygiene caused by the juice do not easily occur.

Preferably, a rotational force receiving gear to which driving force for rotating the fruit and vegetable holder is transmitted is provided in a holder rotation shaft of the fruit and vegetable holder. A the peeling position, a holder motor that rotates the fruit and vegetable holder and a rotational force imparting gear that transmits rotational driving force of the holder motor are provided. The rotational force receiving gear and the rotational force imparting gear are configured to mesh with each other when the fruit and vegetable holder is carried to the peeling position.

As a result of the configuration for rotating the fruit and vegetable holder at the peeling position being a configuration such as this, fewer constituent components are needed compared to that when a rotation motor is provided for each fruit and vegetable holder. A simple and inexpensive configuration is achieved. Maintenance, such as cleaning, is simplified.

Preferably, the holder motor is controlled such that a rotation speed at the start of peeling is higher than a rotation speed during peeling.

As a result of the rotation of the holder motor being controlled in this way, the skin that is peeled at the start of peeling can be positioned away from the fruit or vegetable by centrifugal force and downward by its own weight. As a result, the skin that is continuously peeled can be prevented from becoming wrapped around the fruit or vegetable or the fruit and vegetable holder.

Preferably, the support portion of the fruit and vegetable holder in the peeling device of the present invention is provided with a single or a plurality of sharp pins that pierce and support the fruit or vegetable on an upper surface of a holder main body. At the recovery position for the fruit or vegetable, a fruit and vegetable ejection mechanism is provided. The fruit and vegetable ejection mechanism includes a stage block that includes a rotation piece of which one end in a longitudinal direction is pivotally supported to a stage main body, and that is capable of rotating in parallel with a top surface of the stage main body, is urged at all times in a rotational axis direction of the vertical rotation disk, and in which a semicircular notched fruit and vegetable holder placement portion in which the holder main body of the fruit and vegetable holder that has stopped at the recovery position for the fruit or vegetable is positioned in a state of being urged in the rotational axis direction of the vertical rotation disk is formed, and a stage advancing/retreating means that advances and retreats the stage block such that the rotation piece is capable of moving back and forth between at least a base portion and a tip portion of the pin in the fruit and vegetable holder.

During driving, the peeling device configured in this way rotates the stage main body such that the stage main body partially overlaps the vertical rotation disk when viewed opposing the vertical rotation disk in relation to the base. In this state, as a result of the stage advancing/retreating means being driven and the stage being advanced at the recover position for the fruit and vegetable, the rotation piece that is urged in the rotational axis direction of the vertical rotation disk and in which the fruit and vegetable holder is positioned in the fruit and vegetable holder placement portion comes into contact with the peeled fruit or vegetable from a base portion side of the pin and pushes the fruit or vegetable to a tip end side of the pin. As a result, support of the fruit or vegetable by the pin can be easily released.

Preferably, the stage block is provided such as to freely swing between a position at which the stage main body that is provided with the rotation piece partially overlaps the vertical rotation disk and a position at which the stage main body does not overlap the vertical rotation disk when viewed opposing the vertical rotation disk in relation to a base that is provided in the stage advancing/retreating means.

When maintenance and the like is performed when the peeling device is not being driven, the peeling device configured in this way can swing the stage main body so as not to overlap the vertical rotation disk when viewed opposing the vertical rotation disk in relation to the base. As a result, constituent components of the device are not positioned in a space in front of the disk surface of the vertical rotation disk. Attachment and detachment of the vertical rotation disk is facilitated. Maintenance is simplified.

Preferably, the peeling device of the present invention is provided with a sensor that determines whether or not the fruit or vegetable is attached to the fruit and vegetable holder at the attachment position for the fruit or vegetable. When a detection is made that the fruit or vegetable is not attached, control is performed such that the peeler blade is not driven when the fruit and vegetable holder is carried to the peeling position.

The peeling device configured in this way prevents malfunctions such as the peeler blade coming into contact with the fruit and vegetable holder or the like at the peeling position and causing damage. Work can be safely performed.

### EFFECTS OF THE INVENTION

As described above, in the present invention, a peeling device that enables attachment of a fruit or vegetable to the peeling device, peeling, and recovery from the peeling device to be continuously, easily, and reliably performed, simplifies maintenance such as cleaning because peeled skin does not easily become attached to or entangled with peripheral machinery and attachment and detachment of the vertical rotation disk and the fruit and vegetable holders are facilitated, and is excellent in terms of hygiene, safety, and workability can be provided.

### BRIEF DESCRIPTION OF DRAWINGS

Fig. 1 is an overall perspective view of a configuration of a peeling device according to an embodiment of the present invention.
Fig. 2 is a perspective view of an internal configuration of a device main body of the peeling device in Fig. 1.
Fig. 3 is a front view of the internal configuration of the device main body of the peeling device in Fig. 1.
Fig. 4 is a planar view of the internal configuration of the device main body of the peeling device in Fig. 1.
Fig. 5 is a rear view of the internal configuration of the device main body of the peeling device in Fig. 1.
Fig. 6 is an exploded explanatory diagram of a rotation restriction mechanism of a vertical rotation disk of the peeling device in Fig. 1.
Fig. 7 is an explanatory configuration diagram of a fruit and vegetable holding mechanism and a fruit and vegetable detection mechanism of the peeling device in Fig. 1.
Fig. 8 is explanatory diagrams of the fruit and vegetable holding mechanism and the fruit and vegetable detection mechanism of the peeling device in Fig. 7 in a state in which a fruit or vegetable is not supported, in which, in relation to (B) that is a planar view, (A) is a rear view of (B), (C) is a front view of (B), and (D) is a right side view of (B).
Fig. 9 is explanatory diagrams of the fruit and vegetable holding mechanism and the fruit and vegetable detection mechanism of the peeling device in Fig. 7 in a state in which a fruit or vegetable is supported (the fruit or vegetable is omitted), in which, in relation to (B) that is a planar view, (A) is a rear view of (B), (C) is a front view of (B), and (D) is a right side view of (B).
Fig. 10 is a perspective view of four examples, A to D, of a fruit and vegetable holder that can be applied to the peeling device of the present invention.
Fig. 11 is diagrams of a second apparatus in which a peeling mechanism of the peeler device in Fig. 1 is in a peeler-open state (separated from a fruit or vegetable), in which (A) is a planar view and (B) is a perspective view.
Fig. 12 is diagrams of the second apparatus in which the peeling mechanism of the peeler device in Fig. 1 is in a peeler-closed state (in contact with a fruit or vegetable), in which (A) is a planar view and (B) is a perspective view.
Fig. 13 is an overall perspective view of a configuration of a fruit and vegetable ejection mechanism of the peeling device in Fig. 1.
Fig. 14 is an explanatory diagram of a positional relationship between the fruit and vegetable ejection mechanism and the vertical rotation disk of the peeling device in Fig. 1.
Fig. 15 is an exploded perspective view of a main section of the fruit and vegetable ejection mechanism of the peeling device in Fig. 1.

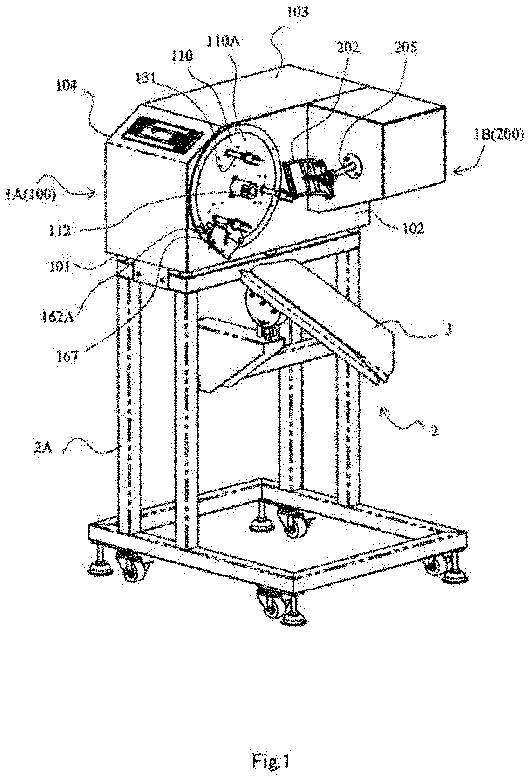

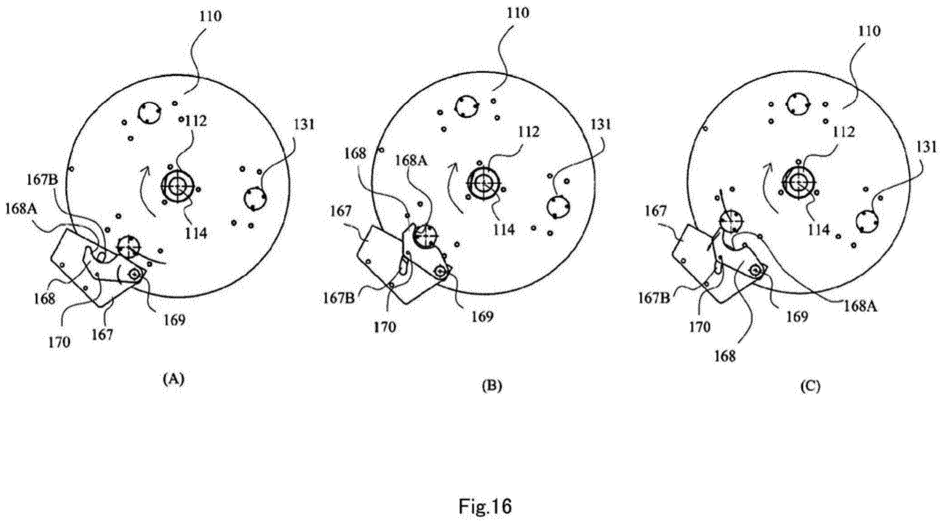

Fig. 16 is explanatory diagrams of a positional relationship between the fruit and vegetable ejection mechanism and the fruit and vegetable holder of the peeling device in Fig. 1, in which (A) is an explanatory diagram of the positional relationship when the fruit and vegetable holder is carried to a fruit and vegetable recovery position from an upstream side in a rotation direction, (B) is an explanatory diagram of the positional relationship when the fruit and vegetable holder reaches the fruit and vegetable recovery position, and (C) is an explanatory diagram of the positional relationship when the fruit and vegetable holder is carried towards a downstream side in the rotation direction from the fruit and vegetable recovery position.
Fig. 17 are diagrams of a driving standby position of a peeler main body in the peeling device in Fig. 1, in which (A) is a front view, (B) is a planar view, and (C) is a right side view (the ejection mechanism is omitted).
Fig. 18 are diagrams of a peeling position of the peeler main body in the peeling device in Fig. 1, in which (A) is a front view, (B) is a planar view, and (C) is a right side view (the ejection mechanism is omitted).
Fig. 19 is a side view of an initial contact state of the peeler main body of the peeling device in Fig. 1 (the ejection mechanism is omitted).
Fig. 20 is a side view of a rotation range (peeling range) and a position after peeling of the peeler main body of the peeling device in Fig. 1 (the ejection mechanism is omitted).
Fig. 21 is an explanatory diagram of a positional relationship between a peeler in the peeling mechanism and a fruit or vegetable supported by the fruit and vegetable holder at the peeling position of the peeling device of the present invention.
Fig. 22 is a side view of a state in which the peeler main body has returned to the driving standby position after completion of peeling in the peeling device shown in Fig. (the ejection mechanism is omitted).

### EXPLANATIONS OF LETTERS OR NUMERALS

- 1: device main body
- 1A: first casing
- 1B: second casing
- 2: mount
- 2A: support column portion
- 3: slope
- K: fruit or vegetable
- 100: first device section
- 101: bottom plate
- 102: front elongated side surface (front surface)
- 103: upper surface
- 104: operating unit
- 105: main body stay
- 106: bearing
- 107: shaft pulley
- 108: timing belt
- 110: vertical rotation disk
- 110A: disk surface
- 112: rotation shaft fitting portion
- 113: vertical rotation disk driving motor
- 114: main shaft
- 115: fastening piece (screw)
- 116: flange portion
- 117: fastening piece (screw)
- 119: bearing
- 120: rotation restriction plate
- 122: detent cam
- 123: post
- 124: stopper
- 124A: notched portion
- 125: slit rotation disk
- 125A: slit
- 126: sensor
- 126A: first sensor
- 126B: second sensor
- 127: pressing bar
- 128: spring member
- 129: spring member
- 130: holder rotation shaft
- 131: fruit and vegetable holder
- 131A: holder main body
- 131B: base plate
- 131C: fruit and vegetable pin
- 131Ca: fruit and vegetable pin (central-column fixing pin)
- 132: rotation shaft support stay
- 133: bearing
- 134: bearing
- 135: rotational force receiving gear
- 135A: sleeve
- 136: fastening piece (screw)
- 137: sleeve
- 138: spring unit
- 138A: flange
- 139: coil spring
- 140: holder motor
- 140A: rotation shaft
- 141: motor gear
- 142: motor block
- 143: spring member
- 144: rotation shaft
- 145: rotational force imparting gear
- 146: swing shaft
- 150: ejection motor
- 150A: rotation shaft
- 151: base
- 152: bracket
- 153: worm
- 154: worm wheel
- 154A: rotation shaft
- 155: crank
- 156: rod
- 157: head plate
- 159A: tube-shaped shaft hole
- 159: spindle fixing member
- 160: spindle
- 161: fastening piece (screw)
- 162: bearing
- 162A: tube-shaped shaft hole
- 164: stage block
- 165: base
- 166: rotation connecting portion
- 166A: rotating body
- 166B: rotation shaft
- 166C: helical torsion spring
- 167: stage main body
- 167A: top surface
- 167B: rotation guide groove
- 167C: main body wall portion
- 168: rotation piece
- 168A: fruit and vegetable holder placement portion
- 169: pin member
- 169A: helical torsion spring
- 169B: tension imparting member
- 170: rotation guide pin
- 171: push plate
- 172: proximity sensor
- 173: swing block
- 173A: contact piece portion
- 173B: locking piece portion
- 200: second device section
- 201: peeler arm
- 202: peeler main body
- 202A: peeler blade
- 202B: gap
- 202D: swing spindle
- 202E: peeler rib
- 203: base
- 204: peeler rotation motor
- 205: peeler shaft
- 205A: flange
- 205B: locking pin
- 207: shaft rotation motor
- 208: center shaft
- 208A: positioning protrusion portion
- 209: stay
- 210: motor pulley
- 211: peeler shaft pulley
- 212: tension belt
- 213: peeler shaft position detection sensor
- 214: peeler shaft sensor disk
- 215: rotation lock member
- 215A: engaging pin
- 215B: lock rotating body
- 218: motor pulley
- 219: shaft axis pulley
- 220: tension belt
- 221: shaft position detection sensor
- 222: shaft axis sensor disk
- 224: arm base
- 224A: shaft locking portion
- 224B: locking recess portion
- 225: hinge
- 227: spring holder
- 228: knurled screw
- 230: coil spring

### DETAILED DESCRIPTION OF EMBODIMENTS

First, a configuration and operations of a peeling device according to an embodiment of the present invention will be described.

A peeling device according to the present embodiment shown in Fig. 1 includes a device main body 1 and a mount 2 that horizontally supports the device main body 1 above a floor in correspondence with a work height of a worker. The device main body 1 includes a first device section 100 that is housed in a first casing 1A that has a bottom plate 101 that is rectangular from a planar view, and a second device section 200 is housed in a second casing 1B that is connected such as to project forward from a laterally elongated side surface (referred to, hereafter, as a front elongated side surface 102) that serves as a front surface of the first casing 1A.

First, the first device section 100 will be described. The first casing 1A that has the bottom plate 101 is formed into an approximate rectangular parallelepiped in which one short side portion of an upper surface 103 is chamfered and in which is disposed an operating unit 104 that includes an operation switch, a volume switch that serves as an adjustment input means for peeling speed and the like, and the like. A vertical rotation disk 110 is disposed on the front elongated side surface 102, such that a circular disk surface 110A configures a front surface of the first casing 1A.

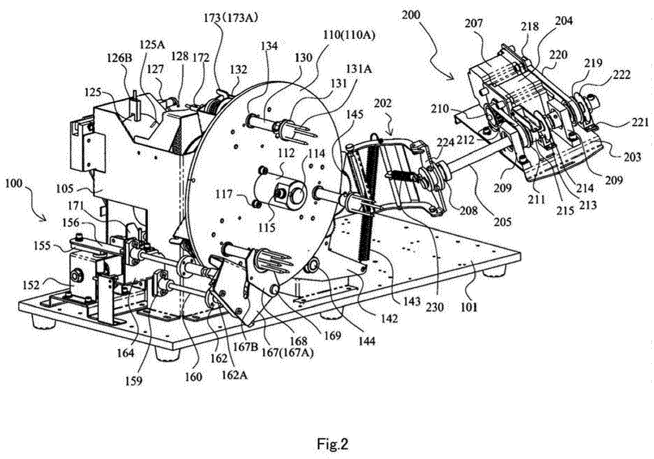

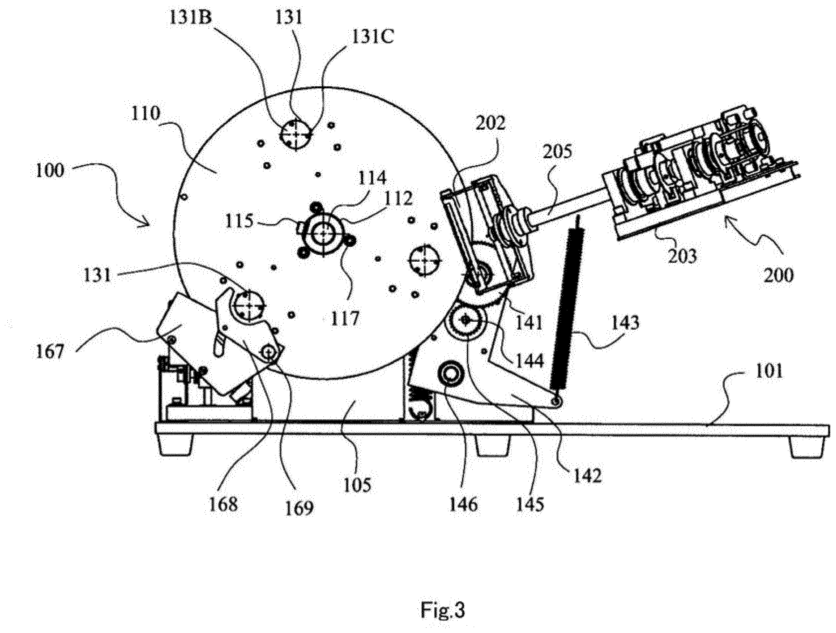

A boss-like rotation shaft fitting portion 112 is formed in the vertical rotation disk 110 on a virtual center axis thereof. As shown in Fig. 2 to Fig. 4, the rotation shaft fitting portion 112 extends horizontally towards the outside of the first casing 1A, in a frontward direction from a bearing 106 that is provided in a main body stay 105 that is erected on the bottom plate 101 inside the first device section 100. The rotation shaft fitting portion 112 uses a main shaft 114 as a rotation shaft, the main shaft 114 being provided such as to be capable of rotating by a driving force from a vertical rotation disk driving motor 113 that is composed of a direct-current (DC) motor and provided inside the first device section 100. The rotation shaft fitting portion 112 is fitted onto a tip end of the main shaft 114, and fixed by a fastening piece 115 such as a screw or is capable of being freely attached and detached by the fastening being released. Furthermore, according to the present embodiment, the vertical rotation disk 110 is fixed by fastening pieces 117, such as screws, at a plurality of sections to a flange portion 116 that is formed in a rear end portion of the rotation shaft fitting portion 112.

In addition, inside the first device section 100, the main shaft 114 is pivotally supported, such as to freely rotate, to the main body stay 105 near an end portion on a rear surface side using a bearing. In an end portion that protrudes further towards the rear surface side from the main body stay 105, a rotation restriction plate 120 that is provided in a detent cam 122, described hereafter, is attached such as to be positioned parallel to the vertical rotation disk 110.

Here, according to the present embodiment, the vertical rotation disk driving motor 113 is configured such that a motor pulley (not shown) that is provided on an output shaft (not shown) thereof and a shaft pulley 107 that is connected to the main shaft 114 are connected by a timing belt 108. As a result, the vertical rotation disk 110 and the rotation restriction plate 120 are rotated with the main shaft 114 therebetween, by the driving force from the vertical rotation disk driving motor 113.

In addition, three holder rotation shafts 130 are rotatably provided in the vertical rotation disk 110, such as to extend vertically in relation to the disk surface 110A of the vertical rotation disk 110 at an even interval of 120 degrees around the rotation axis on which the rotation shaft fitting portion 112 is provided. A fruit and vegetable holder 131 is connected to a tip end of each holder rotation shaft 130. As a result of the rotation (revolution) of the vertical rotation disk 110, the fruit and vegetable holders 131 are able to be intermittently carried to three work positions at the same timing. The three work positions are: an attachment position at which a fruit or vegetable K is attached to the fruit and vegetable holder 131 of a fruit and vegetable holding mechanism; a peeling position at which the fruit or vegetable K that is supported by the fruit and vegetable holder 131 is peeled by a peeler blade 202A of a peeler driving mechanism, while being rotated by a holder rotation mechanism of a peeling mechanism; and a recovery position at which the fruit or vegetable K of which peeling has been completed is released from the fruit and vegetable holder 131 and recovered. That is, the three work positions that are the attachment position for the fruit or vegetable K, the peeling position, and the recovery position for the fruit or vegetable K are provided at even angles around the rotation axis of the vertical rotation disk 110.

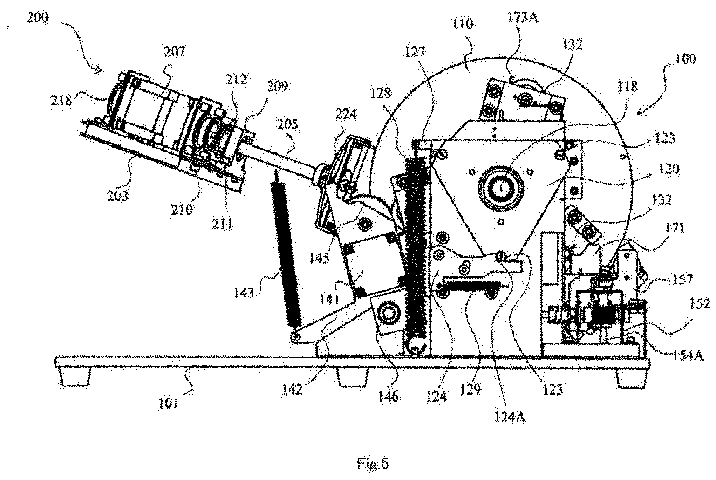

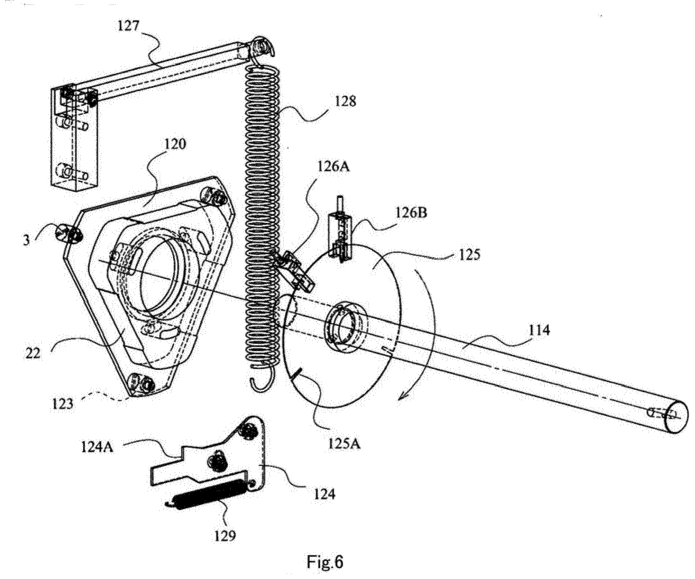

Here, the rotation restriction plate 120 and the detent cam 122 that includes the rotation restriction plate 120 work as a rotation restriction mechanism of the vertical rotation disk 110. As shown in Fig. 5 and Fig. 6, the rotation restriction plate 120 and the detent cam 122 have a planar form that is similar to a deformed hexagon in which angle vertex portions of an equilateral triangle are slightly cut off, and are provided such that the main shaft 114 is positioned at the center of rotation. At each angle vertex portion of the rotation restriction plate 120, a rotation restriction post (pin) 123 is provided in a protruding manner.

In addition, in the main body stay 105, a plate-shaped stopper 124 in which a notched portion 124A with which the post 123 is able to lock is formed is pivotally supported such as to be capable of swinging in accompaniment with the rotation of the main shaft 114. The stopper 124 is urged at all times in the direction in which the stopper 124 engages with the post 123 by a spring member 129 that is stretched between the stopper 124 and the main body stay 105. When the fruit and vegetable holders 131 stop at the predetermined work positions, the post 123 locks with the notched portion 124 of the stopper 124, thereby working as a one-way clutch that restricts rotation of the vertical rotation disk 110 such that the vertical rotation disk 110 does not rotate in a direction opposite a predetermined direction, when the fruit or vegetable K is pierced with a fruit and vegetable pin, when peeling is performed, and the like.

In addition, a slit rotation disk 125 is fixed to the main shaft 114 such as to be capable of rotating integrally with the main shaft 114. Slits 125A are formed in the slit rotation disk 125 in three sections at a 120-degree interval on the circumference of a circular rotating body. The main body stay 105 is provided with a first sensor 126A and a second sensor 126B that each include a light-emitting portion and a light-receiving portion for detection light, and detect a rotation position (rotation amount) by detecting the detection light that passes through the slits 125A. A placement relationship and workings of the three slits 125A, the first sensor 126A, and the second sensor 126B will be described hereafter.

Furthermore, a pressing bar 127 that comes into contact, from above the device main body 1, with an outer periphery of the detent cam 122 that is provided with the rotation restriction plate 120 and presses the detent cam 122 such as to forward-rotate the detent cam 122 is swingably provided in the main body stay 105 such that one end is pivotally supported. The pressing bar 127 is urged at all times to press the detent cam 122 by a large-diameter spring member 128 that is stretched between the other end side and the bottom plate 101.

In the peeling device according to the present embodiment that is configured as described above, the vertical rotation disk driving motor 113 is driven by a switch operation by a worker. The slit rotation disk 125 rotates together with the vertical rotation disk 110. At this time, the detent cam 122 also rotates while resisting the urging from the pressing bar 127.

Here, the first sensor 126A that detects the three slits 125A in the slit rotation disk 125 is provided such that, through detection of the slits 125A of the rotation restriction plate 120, the timing at which the rotation of the rotation restriction plate 120 changes from rotation by the driving force from the vertical rotation disk driving motor 113 to rotation by the urging force on the detent cam 122 from the bar is determined. In addition, the second sensor 126B is provided such that, through detection of the slits 125A of the rotation restriction plate 120, stopping of the fruit and vegetable holders 131 at the predetermined work positions is determined.

As a result, when the first sensor 126A detects the slit 125A, the driving of the vertical rotation disk driving motor 113 is stopped. Subsequently, the rotation restriction plate 120 can be rotated to a predetermined stop position by the urging force on the detent cam 122 from the pressing bar 127. The post 123 can then be locked with the notched portion 124A in the stopper 124. In addition, with the detection by the second sensor 126B that the rotation restriction plate 120 has stopped at a predetermined position, that is, the fruit and vegetable holders 131 have stopped at the predetermined work positions serving as a trigger, transition to the work operation at each stop position, such as peeling or ejecting, can be performed.

In addition, as shown in Fig. 2, each holder rotation shaft 130 configuring a fruit and vegetable holding mechanism according to the present embodiment is configured such that a rear end thereof that is formed having a small diameter is supported such as to freely rotate using a bearing 133 that is provided in a rotation shaft support stay 132 that is provided on the rear surface of the vertical rotation disk 110, and such as to protrude outward from a wall surface of the rotation shaft support stay 132. In addition, a middle portion is supported such as to freely rotate by a bearing 134 that is fitted into a rotation shaft hole formed in the vertical rotation disk 110, and a tip end extends to the front side from the vertical rotation disk 110. In addition, on the rear surface of the vertical rotation disk 110, each holder rotation shaft 130 is provided with a rotational force receiving gear 135 to which driving force for rotating the fruit and vegetable holder 131 is transmitted.

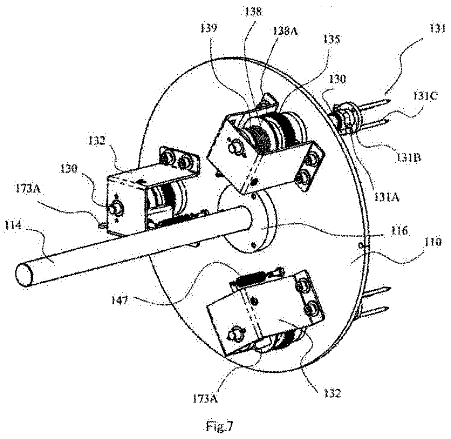

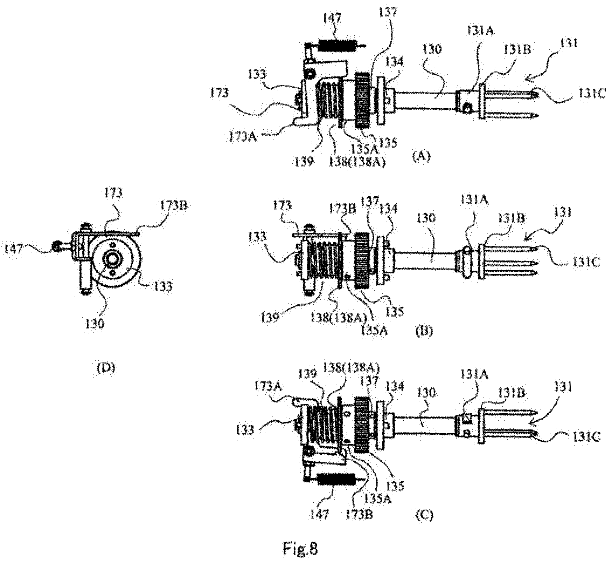

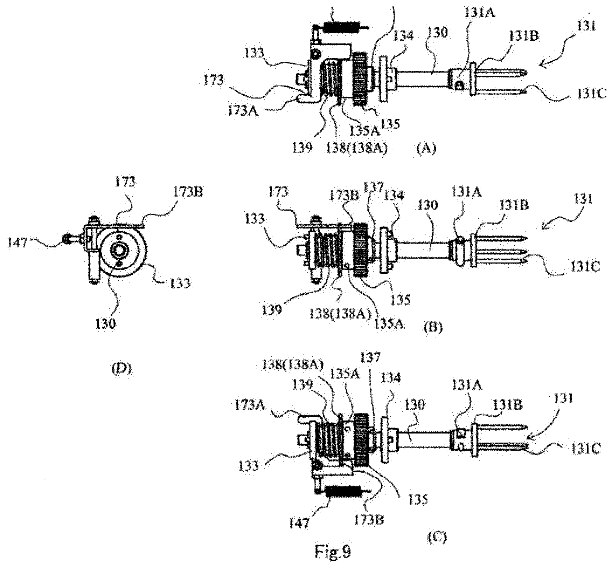

Furthermore, according to the present embodiment, the fruit and vegetable holding mechanism includes a fruit and vegetable detection mechanism that detects whether or not attachment of a fruit or vegetable to the fruit and vegetable holder 131 is performed. Specifically, as shown in Fig. 7 to Fig. 9, in a portion of the holder rotation shaft 130 that extends towards the rear surface side of the vertical rotation disk 110, the rotational force receiving gear 135 is provided such as to be sandwiched between a sleeve (gear sleeve) 135A of the rotational force receiving gear 135 itself and a sleeve 137 of another member, and to be capable of rotating integrally with the holder rotation shaft 130. On the rear surface side of the gear sleeve 135A, a spring unit 138 that fits the holder rotation shaft 130 into a shaft hole such as to freely rotate is provided. The spring unit 138 is provided such that a shaft portion is inserted into a coil of a large-diameter coil spring 139, and the coil spring 139 is sandwiched between the bearing 133 provided in the rotation shaft support stay 132 and a flange 138A formed in the spring unit 138.

In addition, a swing block 173 that is capable of swinging on a swing shaft is provided in the rotation shaft support stay 132. In the swing block 173, a contact piece portion 173A that is formed such as to be capable of coming into contact with a push plate 171 that is provided in a head plate 157 of an ejection mechanism described hereafter that is provided such as to be capable of advancing and retreating at the recovery position of the fruit or vegetable K, and a locking piece portion 173B in which a latch that is capable of engaging with the flange 138A of the spring unit 138 is formed are provided such as to move in an axial direction of the corresponding holder rotation shaft 130 as a result of the swinging of the swing block 173. The swing block 173 is configured such that the latch in the locking piece portion 173B is urged towards the flange 138A side by a spring member 147 that is provided between the swing block 173 and the rear surface of the vertical rotation disk 110.

In the fruit and vegetable detection mechanism configured as described above, when the fruit or vegetable K is pressed against the fruit and vegetable holder 131 and supported, the holder rotation shaft 130 slides and retreats, and a rear end of the holder rotation shaft 130 that is formed such as to have a small diameter protrudes outward from the wall surface of the rotation shaft support stay 132 (the amount of protrusion thereof will be described hereafter). In addition, as a result of the holder rotation shaft 130 sliding and retreating, the coil spring 139 is compressed between the flange 138A of the spring unit 138 and the bearing 133. At this time, as a result of the flange 138A retreating, the latch in the locking piece portion 173B of the swing block 173 that is urged towards the flange 138A side at all times by the spring member 147 engages with the flange 138A. As a result of the engagement, the compressed state of the coil spring 139, and the position of the rotational force receiving gear 135 of the holder rotation shaft 130 can be maintained. In addition, as a result of the swing block 173 swinging, the contact piece portion 173A moves the tip end portion thereof to a position outside of the rotation shaft support stay 132 at which contact with the push plate 171 can be made.

In addition, the fruit and vegetable detection mechanism releases the engagement of the latch in the locking piece portion 173B with the flange 138A by the swing block 173 swinging against the urging from the spring member 147 as a result of the push plate 171 formed in the head plate 157 of the ejection mechanism and the contact piece portion 173A coming into contact with each other at the recovery position, described hereafter.

As a result, the coil spring 139 exerts spring force. The holder rotation shaft 130 is moved by sliding and pressed back, together with the rotational force receiving gear 135 and the like, by the spring unit 138. The protrusion from the rotation shaft support stay 132 of the rear end of the holder rotation shaft 130 that is formed such as to have a small diameter is reduced.

In the fruit and vegetable detection mechanism configured as described above, in the main body stay 105 near the attachment position for the fruit and vegetable K, a proximity sensor 172 that detects the protrusion of the rear end of the holder rotation shaft 130 from the rotation shaft support stay 132 is provided. That is, the protrusion amount of the holder rotation shaft 130 is an amount by which the proximity sensor 172 is capable of determining the sliding of the holder rotation shaft 130 resulting from the pressing when the fruit or vegetable K is supported. As a result of the determination by the proximity sensor 172, when the pressing of the fruit or vegetable K against the fruit and vegetable holder 131 cannot be detected, the control unit performs control such as to stop the operation of the peeler main body 202 from a driving standby position, described hereafter. As a result, malfunctions, such as the worker pressing the operation switch in the operating unit without attaching the fruit or vegetable K to the fruit and vegetable holder and the peeler blade 202A coming into contact with the fruit and vegetable holder 131 or the like at the peeling position, described hereafter, and causing damage can be prevented.

As described above, each fruit and vegetable holder 131 is connected to the holder rotation shaft 130 and is configured such that the fruit or vegetable K is supported in a peelable manner by fruit and vegetable pins 131C of a support portion that extends horizontally in relation to the disk surface 110A of the vertical rotation disk 110.

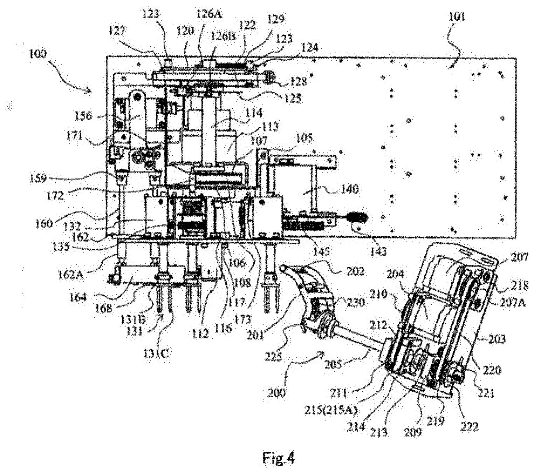

Specifically, each fruit and vegetable holder 130 has a circular cylindrical holder main body 131A, and in a base plate 131B that is provided on one end side thereof, a plurality of round pins (according to the present embodiment, three round pins as shown in Fig. 2, Fig. 4, and the like) that are formed such as to have pointed tips to pierce and hold the fruit or vegetable K are provided as the fruit and vegetable pins 131C, and serve as the support portion for the fruit or vegetable K. In addition, a fitting portion is formed in a recessing shape on the other end side of the holder main body 131A. The fitting portion is capable of fitting onto the holder rotation shaft 130, and in a state in which the fitting portion is fitted onto and connected to the holder rotation shaft 130, the fitting portion is fixed by a fastening piece 136, such as a screw, or is attached such as to be freely attached and detached by the fixing being released. As a result, the fruit and vegetable holder 131 is configured such as to be capable of rotating together with the holder rotation shaft 130.

Regarding the fruit and vegetable holder 131, the fruit and vegetable holder 131 that includes the fruit and vegetable pins 131C that are suitably shaped based on the type of fruit or vegetable K to be peeled can be mounted as appropriate. As a result of the fruit and vegetable holder 131 being selected as appropriate and freely attached and detached in this manner, peeling accuracy can be improved. Maintenance can also be facilitated.

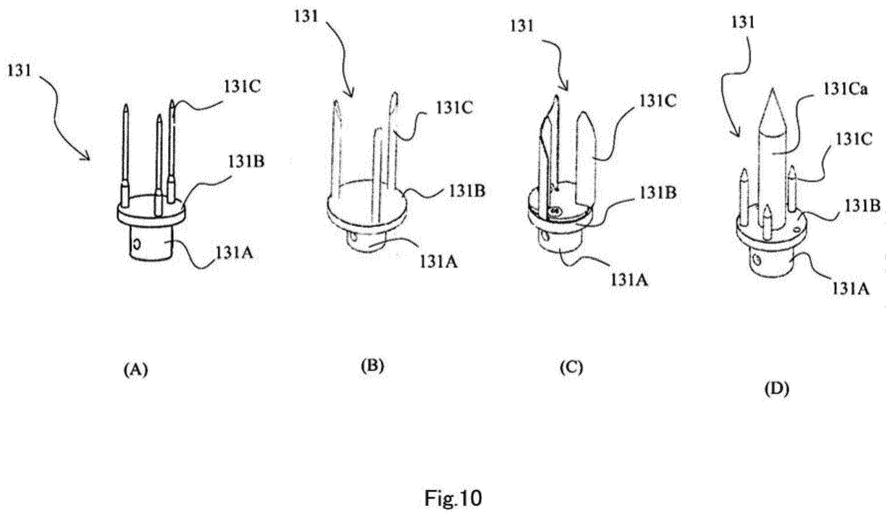

For example, as shown in Fig. 10 (A) to (D), the fruit and vegetable holder 131 (specific example A) that includes stepped round pins, each in which a tip end side portion beyond a truncated conical section has a smaller diameter than a base end side portion, as the fruit and vegetable pins 131, the fruit and vegetable holder 131 (specific example B) that includes the fruit and vegetable pins 131C, each of which the tip end has a sharpened shape in which a cross-section that is oriented towards the rotational axis is formed and the cross-section acts as a guide surface that leads the stone of the fruit or vegetable K to a surrounded space, the fruit and vegetable holder 131 (specific example C) that includes plate pins, each of which has an L-shaped lateral cross-section and includes a radiating surface that extends in a radiating manner from the rotational axis of the holder main body and a circumferential surface that extends in the rotation direction from an outer end side of the radiating surface, as the fruit and vegetable pins 131C and in which the fruit and vegetable pins 131C are arranged at an even interval on a virtual circumference of which the center point is the rotational axis of the fruit and vegetable holder 131, the fruit and vegetable holder 131 (specific example D) that is provided with the above-described fruit and vegetable pins 131C and a central-column fixing pin 131Ca that is inserted into a central column as the same fruit and vegetable pin 131C, and the like can be given as examples. In addition, the fruit and vegetable pins 131C may be formed such as to have a plurality of differing protrusion dimensions from one end surface of the holder main body (refer to the specific example D).

In the case of the fruit and vegetable holder 131 of the specific example A, the fruit and vegetable holder 131 that is provided with stepped round pins 103B is such that the tip end side portion of the stepped round pin that is formed to have a small diameter can easily pierce the fruit or vegetable K and the base end portion side secures the connection of the stepped round pin to the base plate 131B.

In addition, the fruit and vegetable holder 131 of the specific example B is suitable for cases in which the fruit or vegetable K to be worked is a stone fruit, such as a peach, that has a single large stone in the center of the fruit. As a result of the stone of the stone fruit (such as a peach) being held within the surrounded space formed by the plurality of fruit and vegetable pins 131C, the stone fruit can be rotated in a well-balanced manner and firmly held.

The fruit and vegetable holder 131 of the specific example C is capable of rotating the fruit or vegetable K in a well-balanced manner and firmly holding the fruit or vegetable K as a result of the arranged plate pins piercing the fruit or vegetable K. Furthermore, during rotation, the radiating surfaces receive stress that acts on the fruit or vegetable K as a result of rotation. The circumferential surfaces prevent deformation of the radiating surfaces by carrying a portion of the stress applied to the radiating surfaces and inhibits movement of the fruit or vegetable K in an outer circumferential direction caused by rotational centrifugal force. Therefore, during driving of the peeling device, the hold on the fruit or vegetable K does not weaken.

Furthermore, the fruit and vegetable holder 131 of the specific example D is such that the central-column fixing pin is inserted into the central column of the fruit, such as a citrus fruit, and the fruit and vegetable pins 131C arranged in the outer periphery thereof hold the fruit or vegetable K. As a result, the fruit or vegetable K of which the space in the central column is filled by the central-column fixing pin can resist centrifugal force that accompanies the rotation of the fruit and vegetable holder 131 in a manner similar to the fruit or vegetable K that does not have a central column. Consequently, distortion of the outer shape of the fruit or vegetable K can be suppressed.

Still further, as a result of the plurality of differing protrusion dimensions of the fruit and vegetable pins 131C from one end surface of the holder main body, as in the fruit and vegetable holder 131 of the specific example D, when the fruit or vegetable K is pierced by the fruit and vegetable holder 131 and held, the timings at which the fruit or vegetable K comes into contact with the pointed tips of the fruit and vegetable pins 131C can be made to differ. Consequently, the force (force against friction) required to pierce the fruit or vegetable K with the fruit and vegetable pins 103 can be dispersed in time series, and the fruit or vegetable K can be held by the fruit and vegetable holder 131 with a small force.

In addition, in the peeling device according to the present embodiment, the vertical rotation disk 110 is configured such as to rotate in a clockwise direction when viewed from the front. The attachment position for the fruit or vegetable K is provided in an upper area (upper-half area) further above a horizontal plane that passes through the rotation axis of the vertical rotation disk 110, at the highest position (11 to 12 o'clock direction) among the three work positions.

As a result of the attachment position being configured in this manner, space on the upper side of the peeling device for the worker to perform work to support the fruit or vegetable K to the fruit and vegetable holder 131 that extends in the horizontal direction at the same time as the peeling and recovery work can be secured. The work is facilitated.

In addition, a position (3 to 4 o'clock direction) at a 120-degree rotation in the clockwise direction from the attachment position for the fruit or vegetable K is set as the peeling position. Inside the first casing 1A, as the holder rotation mechanism of the peeling mechanism, a holder motor 140 that is configured by a stepping motor and serves as a driving force imparting means for rotating the fruit and vegetable holder 131, and a rotational force imparting gear 141 that transmits the rotational driving force are provided. When the fruit and vegetable holder 131 is carried to the peeling position, the rotational force receiving gear 135 provided on the holder rotation shaft 130 and the rotational force imparting gear 141 are configured such as to mesh together.

Specifically, according to the present embodiment, the holder motor 140 is provided in a motor block 142. The rotational force imparting gear 141 that meshes with a motor gear 145 that is provided on a rotation shaft 140A of the holder motor 140 is provided in the motor block 142. The motor block 142 is swingably attached to the bottom plate 101 of the first casing 1A with a swing shaft 146 provided on one end. The rotational force imparting gear 141 is urged in the rotation axis direction of the vertical rotation disk 110 at all times by a spring member 143 that is stretched between the motor block 142 and the first casing 1A. When the fruit and vegetable holder 131 is carried to the peeling position, the rotational force imparting gear 141 is configured to mesh with the rotational force receiving gear 135 of the fruit and vegetable holder 131 with certainty, while resisting the urging force from the spring member 143.

The configuration by which the fruit and vegetable holder 131 rotates at the peeling position is not limited to that according to the present embodiment. However, as a result of a configuration such as this, for example, fewer constituent components are needed compared to that when a rotation motor is provided for each fruit and vegetable holder 131 and rotation control at the peeling position is performed. A simple and inexpensive configuration is achieved.

Here, returning to Fig. 1, the second device section 200 will be described. On the front elongated side surface 102 of the first casing 1A, the second casing 1B is provided such as to extend towards the front surface side, adjacent to the peeling position that is the stop position of the fruit and vegetable holder 131 to the side of the vertical rotation disk 110. The second device section 200 that operates in cooperation with the first device section 100 is provided in the second casing 1B.

In the second device section 200, the peeler driving mechanism of the peeler driving mechanism of a publicly known configuration that moves the peeler blade 202A of the peeler main body 202 that is supported by a peeler arm 201 along an axial direction (outer periphery) of the fruit or vegetable K that is supported by the fruit and vegetable holder 131 in a state in which the peeler blade 202A is pressed against the fruit or vegetable K is provided.

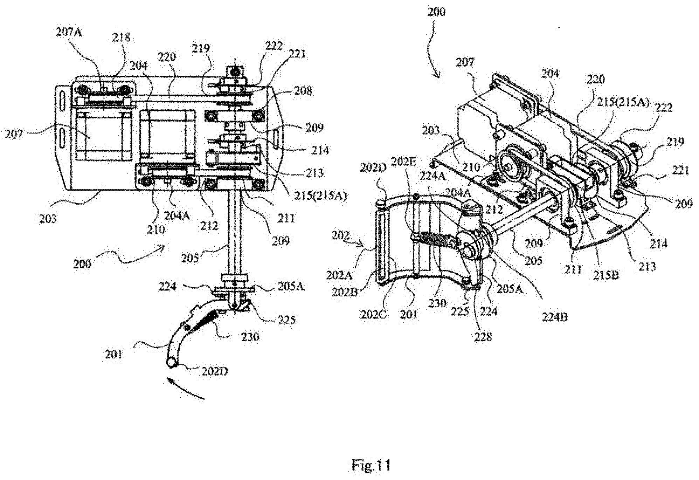

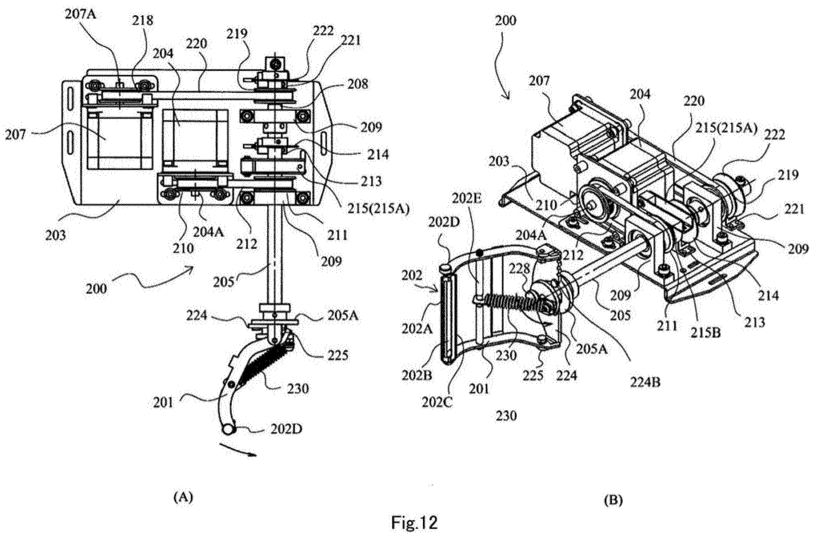

As shown in Fig. 11 and Fig. 12, the peeler driving mechanism rotatably supports a peeler shaft 205 that rotates by being driven by a peeler rotation motor 204 that is disposed on a base 203 inside the second casing 1B and moves the peeler main body 202 such as to rotate along the outer periphery of the fruit or vegetable K that is supported by the fruit and vegetable holder 131, and a center shaft 208 that is arranged coaxially with the peeler shaft 205 and rotates by being driven by a shaft rotation motor 207 that is disposed on the base 203 inside the second casing 1B.

Specifically, the peeler driving mechanism rotatably supports the hollow peeler shaft 205 that includes an inner hole and is capable of rotating by being driven by the peeler rotation motor 204, to a pair of stays 209 that are erected on the base 203 using a bearing. The peeler shaft 205 is capable of rotating as a result of driving force from the peeler rotation motor 204 being transmitted thereto, via a drive transmission system that is configured by a tension belt 212 that is looped between a motor pulley 210 that is provided in a rotation shaft 204A of the peeler rotation motor 204 and a peeler shaft pulley 211 that is provided in the peeler shaft 205.

A peeler shaft sensor disk 214 in which two slits (not shown) that allow passage of detection light from a peeler shaft position detection sensor 213 that is disposed in the base 203 and has a light-emitting portion and a light-receiving portion for the detection light are formed (at a 180-degree interval) on a circumference of a circular rotating body is provided in the peeler shaft 205. A rotation position (rotation amount) can be detected by the peeler shaft position detection sensor 213 detecting the detection light.

In addition, in the base 203, an engaging pin 215A of a rotation lock member 215 is provided such as to freely swing in a direction coming into and out of contact with the peeler shaft 205 as a result of a rear end portion thereof being pivotally supported, and such as to be urged towards the base 203 side at all times by a spring member (not shown) that is stretched between the tip end thereof and the base 203.

In addition, in the peeler shaft 205, a lock rotating body 215B of the rotation lock member 215 that is composed of a substantially circular rotating body, and engages with the engaging pin 215A and locks the rotation of the peeler shaft 205 during rotation of the peeler shaft 205 in one rotation direction is provided. The lock rotating body 215B is arranged such that, when the engaging pin 215A engages with a circumferential area thereof and the rotation is locked, the peeler shaft 205 is positioned at a point of origin that serves as an initial angle for peeling.

In addition, the peeler driving mechanism supports, on the stays 209, the center shaft 208 that is coaxially provided in an extending manner inside the shaft inner hole of the peeler shaft 205 such that one end thereof faces the first device section 100 side and is capable of being rotated by the shaft rotation motor 207. The center shaft 208 is a rotation shaft for operating the coil spring 230 that serves as an urging member to place the peeler main body 202 in contact with the fruit or vegetable K. The center shaft 208 is capable of rotating as a result of driving force from the shaft rotation motor 207 being transmitted thereto, via a drive transmission system that is configured by a tension belt 220 that is looped between a motor pulley 218 that is provided in a rotation shaft 207A of the shaft rotation motor 207 that is placed on the base 203 and a shaft axis pulley 219 that is provided in the center shaft 208.

A shaft axis sensor disk 222 in which a single slit (not shown) that allows passage of detection light from a shaft position detection sensor 221 that is disposed in the base 203 and has a light-emitting portion and a light-receiving portion for the detection light is formed on a circumference of a circular rotating body is provided in the center shaft 208. A rotation position (rotation amount) can be detected by the shaft position detection sensor 221 detecting the detection light.

Here, in the peeler driving mechanism, a pair of arm-shaped peeler arms 201 and 201 that support the peeler main body 202 including the peeler blade 202A such as to suspend the peeler main body 202 from tip end portions thereof in a manner enabling the peeler main body 202 to swing along the surface of the fruit or vegetable K is provided. In addition, the peeler main body 202 includes the peeler blade 202A and a guide portion 202C with a gap 202B that extends in a longitudinal direction therebetween, and is suspended in a freely swinging manner by swing spindles 202D formed on both ends in the longitudinal direction of the peeler main body 202 being supported by the peeler arms 201 and 201.

The peeler main body 202 that includes the publicly known peeler blade 202A that is a flat blade, a comb-tooth blade, or the like and suitable for peeling the fruit or vegetable K to be peeled, and in which a width dimension (dimension in a direction orthogonal to the longitudinal direction) of the gap 202B based on a peeling thickness of the fruit or vegetable K to be peeled is secured can be mounted to the peeler arms 201 and 201.

In addition, base end portions of the pair of peeler arms 201 and 201 are respectively attached in a freely swinging manner to a plate-shaped arm base 224 by a pair of hinges 225 and 225. A substantially semicircular notched shaft locking portion 224A into which the peeler shaft 205 is fitted is formed in the arm base 224. In a state in which a rear surface of the arm base 224 is overlapped with the front surface of a flange 205 formed in a tip end of the peeler shaft 205 and the peeler shaft 205 is fitted into the shaft locking portion 224A, a plurality of locking recess portions 224B formed in the inner circumferential portion of the shaft locking portion 224A are latched to locking pins 205B formed on the flange 205A and thereby fixed.

In addition, a circular disk-shaped spring holder 227 is provided in a tip end of the center shaft 208 that is provided such as to extend from the peeler shaft 205. The spring holder 227 is fixed using a knurled screw 228 in a state in which a positioning hole 227A formed in the center thereof is fitted onto a positioning protrusion portion 208A formed in the center of the tip end of the center shaft 208.

One end of the coil spring 230 that serves as an urging member for placing the peeler blade 202A in contact with the fruit or vegetable K is attached to the spring holder 227. The other end of the coil spring 230 is connected to a center portion of a peeler rib 202E that is provided between the pair of peeler arms 201 and 201 of the peeler arm 201 such as to extend in parallel with the peeler blade 202A. The coil spring 230 acts as an urging member of which tautness changes depending on the rotation of either of the center shaft 208 and the peeler shaft 205, or both, and is capable of adjusting a state of contact/separation of the peeler main body 202 in relation to the fruit or vegetable K [Fig. 11 shows a peeler-open state (separated from the fruit or vegetable K) and Fig. 12 shows a peeler-closed state (in contact with the fruit or vegetable K)].

The center shaft 208 and the peeler shaft 205 are provided inside the second casing 1B such as to be oriented towards a center direction of the fruit or vegetable K held by the fruit and vegetable holder 101, while an elevation angle from a virtual plane (the disk surface 110A of the vertical rotation disk 110) orthogonal to the axial direction of the fruit and vegetable holder 131 ranges from 20 degrees to 25 degrees. According to the present embodiment, a bottom portion of the second casing 1B is formed such as to be tilted by the above-described angle. The base 203 is provided in the bottom portion, and the attitude and position of the peeler main body 202 in relation to the fruit or vegetable K are adjusted.

In addition, at the peeling position, the peeler driving mechanism of the peeling mechanism performs peeling by placing the peeler blade 202A in contact with the fruit or vegetable K that is supported by the fruit and vegetable holder 131 and rotates in the counter-clockwise direction, in an area above the horizontal plane that passes through the rotation axis of the fruit and vegetable holder 131.

As a result of the contact position relationship between the fruit or vegetable K supported by the fruit and vegetable holder 131 and the peeler main body 202 of the peeler driving mechanism at the peeling position being prescribed in this manner, the skin of the peeled fruit or vegetable K can drop by its own weight without wrapping around the fruit and vegetable holder 131 or the fruit or vegetable K, and can be recovered below the peeling device.

In addition, as shown in Fig. 2, a position (7 to 8 o'clock direction) at a 120-degree rotation in the clockwise direction from the peeling position and the lowest position among the three work positions is set as the recovery position for the fruit or vegetable K. The first casing 1A is provided with the fruit and vegetable ejection mechanism in which a crank 155 is used as a stage advancing/retreating means for moving a stage block 164 back and forth, a rotation piece 168 provided in the stage block 164 is placed in contact with the peeled fruit or vegetable K from the base portion side of the fruit and vegetable pins 131C, the fruit or vegetable K is directly pushed and moved in the tip end direction of the fruit and vegetable pins 131C, the support by the fruit and vegetable pins 131C is released, and the fruit or vegetable K is recovered.

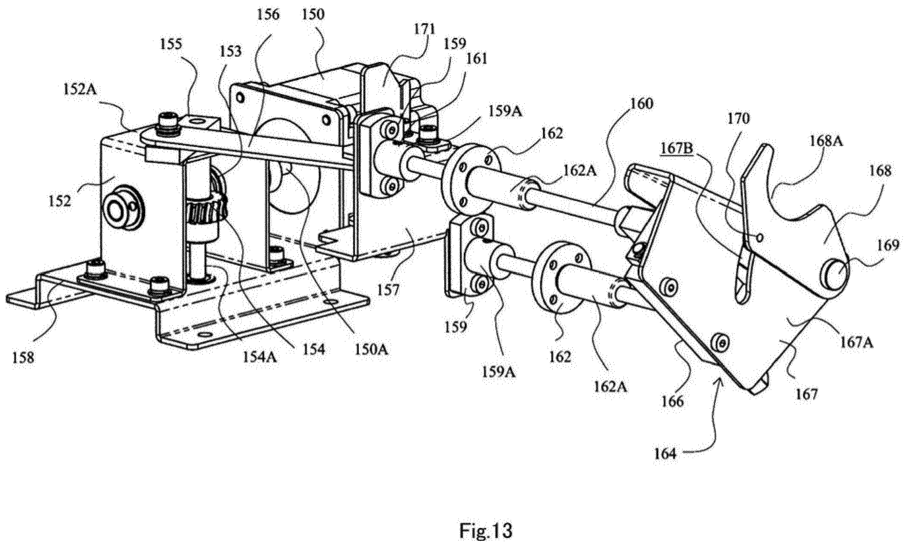

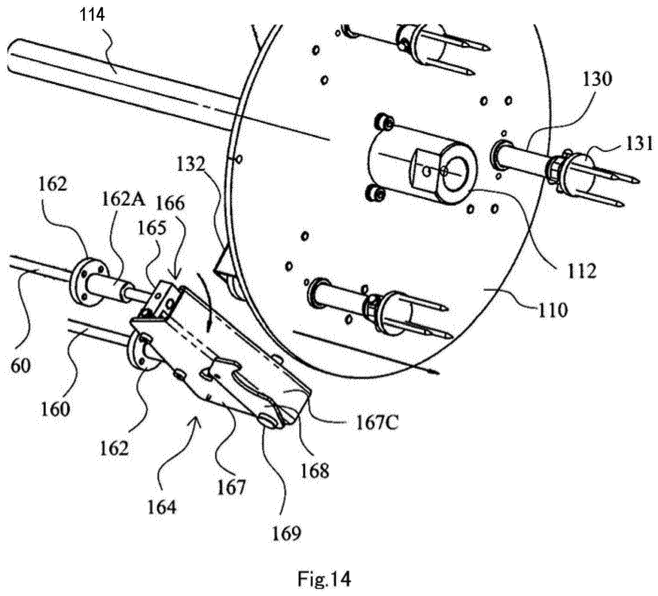

Specifically, as shown in Fig. 13 and Fig. 14, the fruit and vegetable ejection mechanism according to the present embodiment includes an ejection motor 150 that is configured by a stepping motor. The ejection motor 150 is disposed in a base 151 on the bottom plate 101 such that a rotation shaft 150A thereof extends in a horizontal direction. One end of a worm 153 that is rotatably laterally laid across a bracket 152 provided in the base 151 on the bottom plate 101 is connected to the rotation shaft 150A. A worm wheel 154 that meshes with the worm 153 is erected inside the bracket 152 such as to freely rotate on a rotation shaft 154A. One end of the crank 155 is fixed to an end portion of the rotation shaft 154A that protrudes outward from a top plate 152A of the bracket 152, and is configured such as to rotate around the rotation shaft 154A in accompaniment with the rotation of the rotation shaft 154A.

The head plate 157 is provided on the other end of the crank 155 with a rod 156 therebetween. According to the present embodiment, a push plate that comes into and out of contact with the contact piece portion of the fruit and vegetable rotation mechanism when the stage block 164 is advanced and retreated is provided in the head plate 157. In addition, spindle fixing members 159 that each have a tube-shaped shaft hole 159A are provided in two sections of the head plate 157. One end of a spindle 160 is inserted into each tube-shaped shaft hole 159A and fixed by being fastened by a screw 161 that serves as a fastening member.

The spindle 160 is provided such that the other end thereof extends from the head plate 157 towards the direction of the front elongated side surface 102 of the first casing 1A, passes through a tube-shaped shaft hole 162A of a bearing 162 provided on the front elongated side surface 102, and approaches the outside of the first casing 1A. The stage block 164 that is placed in contact with the fruit or vegetable K during ejection is provided on the other end of the spindle 160.

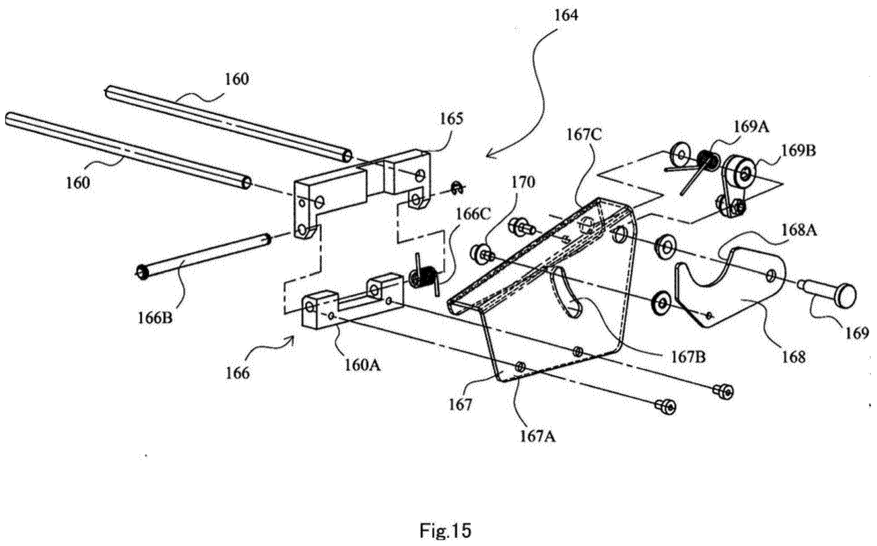

As shown in Fig. 15, the stage block 164 according to the present embodiment includes a base 165 to which the other ends of the two spindles 160 are fixed, and a stage main body 167 that is provided in the base 165 with a rotation connecting portion 166 therebetween. The rotation connecting portion 166 includes a rotating body 166A that fixes the stage main body 167, a rotation shaft 166B that pivotally supports the rotating body 166A such as to be capable of rotating in relation to the base 165, and a helical torsion spring 166C that is provided such that the rotation shaft 166B is fitted into the coil and such as to require load when the stage main body 167 is rotated such that the top surface 167A thereof is positioned in parallel with an extending direction of the spindle. The stage main body 167 is configured to be rotated by the rotation connecting portion 166 by about 90 degrees to a state in which the top surface 167A is parallel with the vertical rotation disk 110 and a portion of the stage main body 167 overlaps the vertical rotation disk 110 when viewed facing the vertical rotation disk 110, and a state in which the top surface 167A is positioned in a direction orthogonal to the vertical rotation disk 110 and the stage main body 167 does not even slightly overlap the vertical rotation disk 110 when viewed facing the vertical rotation disk 110.

In addition, the rotation piece 168 that is formed such that one end thereof in the longitudinal direction is pivotally supported to the top surface 167A and such as to be capable of rotating in parallel with the top surface 167A is provided on the top surface 167A of the stage main body 167. Specifically, according to the present embodiment, the rotation piece 168 is configured such that, when the stage main body 167 is positioned such as to partially overlap the vertical rotation disk 110, one end in the longitudinal direction positioned on the upstream side in the rotation direction of the vertical rotation disk 110 is pivotally supported to the top surface 167A of the stage main body 167 by a pin member 169, the pin member 169 is fitted into the coil of a helical torsion spring 169A and a hole in a tension imparting member 169B, and further, an arm of the helical torsion spring 169A is sandwiched between the tension imparting member 169B and a main body wall portion 167C that continues from the top surface 167A of the stage main body 167 and bends towards the rear, and the rotation piece 168 is urged at all times in the rotational axis direction of the vertical rotation disk 110.

In addition, in the rotation piece 168, a semicircular notched fruit and vegetable holder placement portion 168A that positions the holder main body 131A of the fruit and vegetable holder 131 that has stopped at the recovery position for the fruit or vegetable K in a state of being urged in the rotational axis direction of the vertical rotation disk 110 is formed.

In addition, in the rotation piece 168, a rotation guide pin 170 is provided such as to protrude towards the stage main body 167. The rotation guide pin 170 is fitted into a circular arc-shaped rotation guide groove 167B formed in the top surface 167A of the stage main body 167 and is configured to restrict the rotation amount (rotation range) during rotation with the pin member 169 as a rotational axis.

As shown in Fig. 16(A), the rotation piece 168 rotates outside of the vertical rotation disk 110 against the urging from the pin member 169 by moving in the rotation direction of the vertical rotation disk 110 while in contact with the fruit and vegetable holder 131 as a result of the rotation of the vertical rotation disk 110. Eventually, when the fruit and vegetable holder 131 stops at the recovery position for the fruit or vegetable K, as shown in Fig. 16(B), the rotation piece 168 rotates in the rotation axis direction of the vertical rotation disk 110 by being urged by the pin member 169 and positions the fruit and vegetable holder 131 in the notched fruit and vegetable holder placement portion 168A. Then, as shown in Fig. 16(C), as a result of the vertical rotation disk 110 further rotating, the rotation piece 168 again rotates outside of the vertical rotation disk 110 against the urging by moving in the rotation direction of the vertical rotation disk 110 while in contact with the fruit and vegetable holder 131. Eventually, the engagement between the rotation piece 168 and the fruit and vegetable holder 131 is released. The rotation of the rotation piece 168 is guided by the rotation guide groove 167B and the rotation guide pin 170.

During driving, as shown in Fig. 16, the fruit and vegetable ejection mechanism configured as described above positions the stage main body 167 such as to partially overlap the vertical rotation disk 110 when viewed opposing the vertical rotation disk 110 in relation to the base 165. Then, in this state, the vertical rotation disk driving motor 131 is driven, and the vertical rotation disk 110, the slit rotation disk 125, and the detent cam 122 that includes the rotation restriction plate 120 are rotated together with the main shaft 114. When the first sensor 126A detects the slit 125A of the slit rotation disk 125, the rotation of the vertical rotation disk 110 is stopped. The vertical rotation disk 110 is rotated to the respective predetermined stop positions of the fruit and vegetable holders 131 by the urging force from the pressing bar 127 to the detent cam 122. The post 123 is locked with the notched portion 124A of the stopper 124. At this time, at the recovery position for the fruit or vegetable K, as described above, the fruit and vegetable holder 131 is positioned in the notched fruit and vegetable holder placement portion 168A formed in the rotation piece 168.

Then, with the detection by the second sensor 126B that each fruit and vegetable holder 131 has stopped at the predetermined position as a trigger, the ejection motor 150 is driven. The stage block 164 is advanced and retracted once between the base portion periphery of the fruit and vegetable holder 131 and the tip end of the fruit and vegetable pins 131C using the crank 155. The amount of advance/retreat of the stage block 164 by the crank 155 at this time is equal to or greater than a longest dimension of the fruit and vegetable pins 131C that are provided. As a result, the rotation piece 168 that is urged in the rotation axis direction of the vertical rotation disk 110 and in which the fruit and vegetable holder 131 is positioned in the fruit and vegetable holder placement portion 168A can be placed in contact with the peeled fruit or vegetable K from the base portion side of the fruit and vegetable pins 131C, and the fruit or vegetable K can be pushed towards the tip end side of the fruit and vegetable pins 131C. As a result, support of the fruit or vegetable K by the fruit and vegetable pins 131C can be easily released.

In addition, in the peeling device that includes the fruit and vegetable ejection mechanism configured as described above, when maintenance and the like are performed when the peeling device is not being driven, as shown in Fig. 14, the stage main body 167 is not overlapped with the vertical rotation disk 110 when viewed opposing the vertical rotation disk 110 in relation to the base 165, and is rotated 90 degrees by the rotation connecting portion 166 such that the top surface 167A of the stage main body 167 is positioned in the extending direction of the spindle 160. As a result, constituent components that inhibit attachment and detachment of the vertical rotation disk 110 are not positioned in a front space of the disk surface 110A of the vertical rotation disk 110. Therefore, attachment and detachment of the vertical rotation disk 110 from the main shaft 114 is facilitated and maintenance is simplified.

Returning to Fig. 1, in a support column portion 2A of the mount 2 that supports the first casing 1A, a slope 3 of which an upper end is positioned below the recovery position for the fruit or vegetable K is provided such that a tilt angle and an extending direction thereof are adjustable. The fruit or vegetable K that is released from the support by the fruit and vegetable pins 131C of the fruit and vegetable holder 131 and drops downward by its own weight is sent down the slope 3 and can be recovered.

In addition, the peeling device according to the present embodiment includes the control unit (not shown) that drives the vertical rotation disk driving motor 113 by detecting an ON operation of the operation switch provided in the operating unit 104, determines the detection of detection light by the sensors 126A and 126B, and controls driving (such as speed, rotation amount, synchronization) of the shaft rotation motor 207, the peeler rotation motor 204, and the like.

According to the present embodiment, after a main power supply switch (not shown) provided in the first casing 1A is turned on, each time an ON operation of the operation switch by the worker is performed, the control unit drives the driving of the vertical rotation disk driving motor 113 and rotates the main shaft 114. When the first sensor 136A detects the detection light passing through the slit 125A in the slit rotation disk 125, the control unit stops the driving of the vertical rotation disk driving motor 113, further rotates the vertical rotation disk 110 by the pressing from the pressing bar 127 that is in contact with the detent cam 122, locks the post 123 of the rotation restriction plate 120 with the notched portion 124A in the stopper 124, and stops the rotation of the vertical rotation disk 110. In this way, the control unit rotates the vertical rotation disk 110 by only a predetermined amount and determines that each fruit and vegetable holder 131 has been carried to the work position through detection by the second sensor 126B of the detection light that passes through the next slit 125A in the slit rotation disk 125.

With the detection of the detection light by the second sensor 126B as a trigger, the control unit performs control to operate the peeling mechanism at the peeling position and operate the fruit and vegetable ejection mechanism at the recovery position. Then, in the peeling mechanism, the control unit performs control to operate the rotation lock member 215, and when the return of the peeler main body 202 to the initial position angle (initial attitude) for peeling is detected by the peeler shaft detection sensor 213 detecting the detection light that passes through the slit 214A in the peeler shaft sensor disk 214, enables the ON operation of the operation switch.

Here, the control unit is capable of adjusting the speed, rotation amount, and the like of the driving of the motors 113, 140, 204, and 207 based on input signals from an adjustment input means provided in the operating unit 104 in the first casing 1A. In particular, according to the present embodiment, the control unit performs control such that the rotation speed of the holder motor 140 at the start of peeling is faster than the rotation speed during peeling. As a result of the rotation of the holder motor 140 being controlled in this way, the skin that is peeled at the start of peeling can be positioned away from the fruit or vegetable K by centrifugal force and downward by its own weight. As a result, the skin that is continuously peeled can be prevented from becoming wrapped around the fruit or vegetable K or the fruit and vegetable holder 131.

Here, the operations and the driving of the peeling device that is configured as described above will be described in detail.

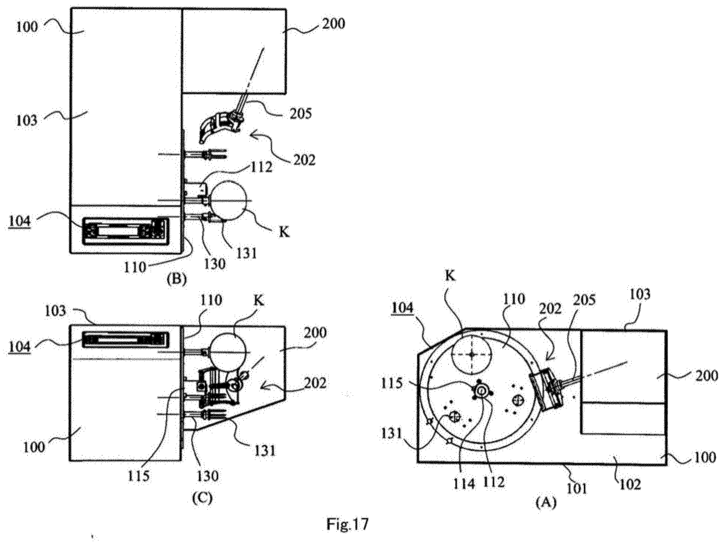

First, the main power supply of the peeling device is turned on. At this time, each fruit and vegetable holder 131 is stopped at a work position. As shown in Fig. 17, at the peeling position, the peeler main body 202 is positioned near the rotation axis of the fruit and vegetable holder 131 in an angular position (driving standby position) that does not inhibit conveyance from the attachment position for the fruit or vegetable K supported by the fruit and vegetable holder 131 to the peeling position, and conveyance from the peeling position to the recovery position. In addition, at the recovery position, the rotation piece 168 provided in the stage block 164 is positioned in a position (driving standby position) at which the fruit and vegetable holder 131 is positioned in the notched fruit and vegetable holder placement portion.

In addition, at the attachment position, the worker pierces the fruit or vegetable K to be peeled with the fruit and vegetable pins 131C of the fruit and vegetable holder 131 of the fruit and vegetable holding mechanism on a virtual center axis of the fruit or vegetable K. At this time, the worker secures a standing position to the side such as to be capable of viewing the positional relationship between the fruit and vegetable pins 131C extending in the horizontal direction from the vertical rotation disk 110 and the fruit or vegetable K, and performs the operation to pierce the fruit or vegetable K with the fruit and vegetable pins 131C by moving the fruit or vegetable K in the horizontal direction and pressing the fruit or vegetable K against the fruit and vegetable pins 131C. As a result, the fruit and vegetable pins 131C can be inserted into the center of the fruit or vegetable K.

When the fruit or vegetable K that has hard flesh, such as a persimmon or an apple, is supported by the fruit and vegetable pins 131C, a corresponding frictional resistance acts between the fruit and vegetable pins 131C and the fruit or vegetable K. Therefore, a large pressing force is required. For example, when the fruit or vegetable K is pressed against and supported by the fruit and vegetable pins 131 that are implanted such that the tip ends face upward, should the fruit or vegetable K be attached using the body weight of the worker, the worker cannot attach the fruit or vegetable K while viewing and confirming the positional relationship between the fruit and vegetable pins 131C and the fruit or vegetable K. In addition, should the worker attempt to attach the fruit or vegetable K while viewing and confirming the positional relationship between the fruit and vegetable pins 131C and the fruit or vegetable K, because the attachment operation for the fruit or vegetable K is performed using only the strength of the arms, the arms of the worker become tired and processing a large quantity of fruit or vegetables K becomes difficult.

Conversely, should the fruit or vegetable K be pressed against and attached to the fruit and vegetable pins 131C that are implanted such that the tip ends face downward, from below, a large amount of force for piercing the fruit or vegetable K with the fruit and vegetable pins 131C is obviously required. During operation, visibility is blocked by the fruit or vegetable K and the like. The fruit and vegetable pins 131C may not be inserted into the center of the fruit or vegetable K. There is also risk of injury to the hands and fingers.

In this respect, should the fruit or vegetable K be moved in the horizontal direction in relation to the fruit and vegetable pins 131C that extend in the horizontal direction and pressed against the fruit and vegetable pins 131C, as according to the present embodiment, for example, compared to when the fruit or vegetable K is pressed against the descending fruit and vegetable pins 131C from below, the force required for pressing is significantly reduced and fatigue experienced by the worker is also reduced. In addition, because the fruit or vegetable K can be attached while the worker views and confirms the positional relationship between the fruit and vegetable pins 131C and the fruit or vegetable K, the fruit and vegetable pins 131C can be inserted into the center of the fruit or vegetable K. Therefore, during the subsequent peeling operation at the peeling position, tilting and rotating of the fruit or vegetable K can be suppressed, and peeling can be beautifully and reliably performed.

Upon completion of the attachment of the fruit or vegetable K, the worker presses a driving switch in the operating unit 104. As a result of the ON operation of the driving switch, the vertical rotation disk driving motor 113 is driven, and as a result of the rotational force thereof, the vertical rotation disk 110 is rotated in the rotation direction (clockwise direction) via the main shaft 114. At this time, when the first sensor 126A detects the slit 125A formed in the slit rotation disk 125 that rotates together with the vertical rotation disk 110 and the main shaft 114, the control unit turns OFF the driving of the vertical rotation disk driving motor 113.

Even when the driving of the vertical rotation disk driving motor 113 is turned OFF, the pressing force from the pressing bar 127 acts on the vertical rotation disk 110 via the detent cam 122. Therefore, the vertical rotation disk 110 further rotates, and as a result, rotates about 120 degrees, sending each fruit and vegetable holder 131 to the predetermined stop position. The post 123 formed in the detent cam 122 is locked with the notched portion 124A in the stopper 124 and the vertical rotation disk 110 is stopped. Because the post 123 is locked with the notched portion 124A, reverse rotation of the vertical rotation disk 110 from the state in which the fruit and vegetable holders 131 have been carried to the work positions is completely prevented.

Conveyance of the fruit and vegetable holders 131 to the work positions is confirmed by the second sensor 126B detecting the slit 125A formed in the slit rotation disk 125. With the detection by the second sensor 126B as a trigger, the control unit performs peeling of the fruit or vegetable K at the peeling position and ejection of the peeled fruit or vegetable K at the recovery position.

That is, at the peeling position, the control unit rotates the holder motor 140 and controls the driving of the peeler shaft rotation motor 204 and the shaft rotation motor 207, and thereby moves the peeler blade 202A of the peeler main body 202 supported by the peeler arm 201 along the outer periphery of the fruit or vegetable K that is held by the fruit and vegetable holder 131 in a state in which the peeler blade 202A is pressed against the fruit or vegetable K, and performs peeling.

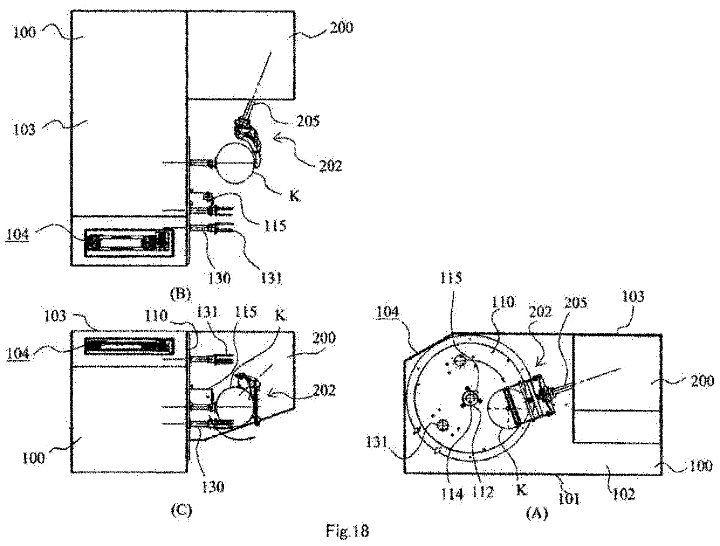

Specifically, as a result of the ON operation of the driving switch in the operating unit 104, the control unit simultaneously drives the vertical rotation disk driving motor 113, and the peeler rotation motor 204 and the shaft rotation motor 207 as shown in Fig. 18. The peeler shaft 205 and the center shaft 208 are synchronously rotated, and the peeler main body 202 that is at the driving standby position (initial attitude) is positioned at the peeling start position. In this way, as a result of the peeler rotation motor 204 and the shaft rotation motor 207 being driven simultaneously with the driving of the vertical rotation disk driving motor 113 and the peeler main body 202 being positioned at the start position angle for peeling, takt time can be shortened.

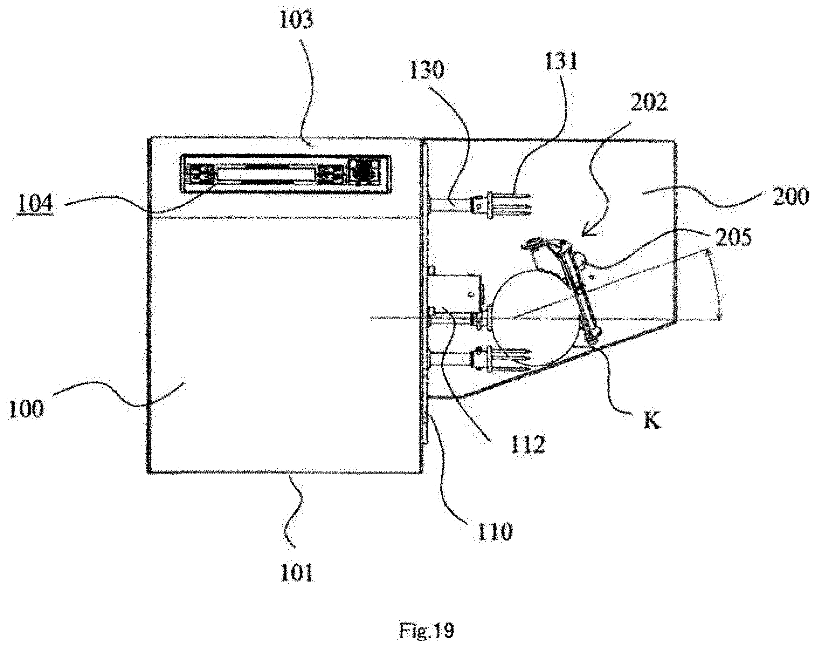

Next, with the detection of the slit 125A formed in the slit rotation disk 125 by the second sensor 126B as a trigger, as shown in Fig. 19, the control unit drives the shaft rotation motor 207, rotates the center shaft 208 in advance by a first angle, and increases the tautness of the coil spring 230. The peeler main body 202 is thereby pulled towards a petal direction and placed in contact with the fruit or vegetable K.

The first angle is an angle for placing the peeler blade 202A of the peeler main body 202 in contact with the fruit or vegetable K, and further, for adjusting the pressure of the contact, and is a rotation angle from the start position angle for peeling. In addition, the first angle is a rotation angle difference between the rotation angle of the peeler shaft 205 and the rotation angle of the center shaft 208.

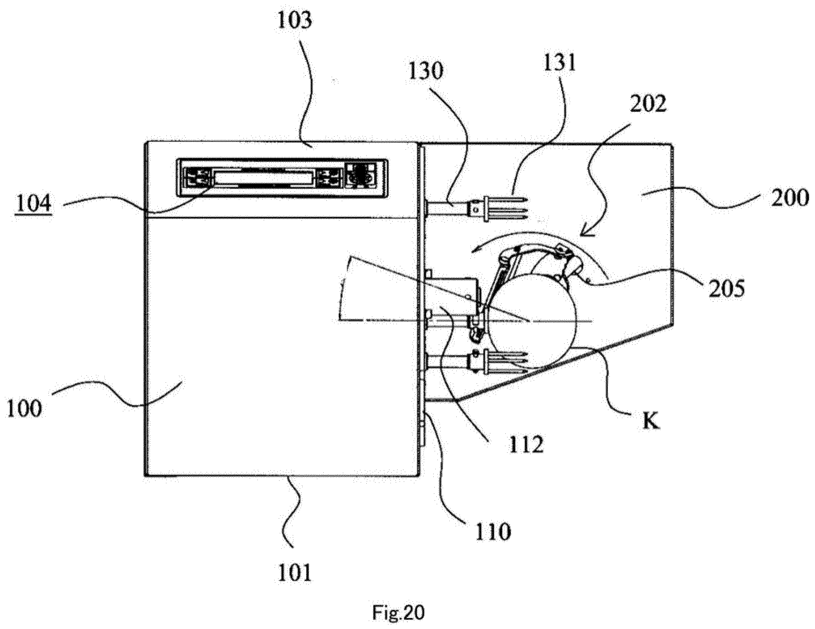

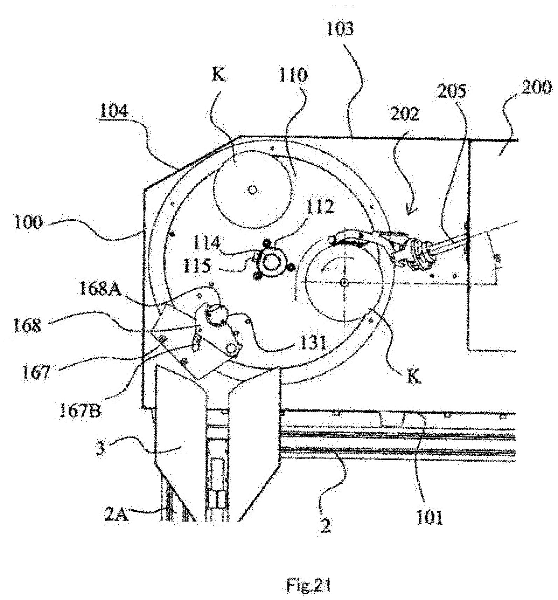

Next, as shown in Fig. 20, the control unit drives the peeler rotation motor 204 and the shaft rotation motor 207, and synchronously rotates the center shaft 208 and the peeler shaft 205 by a second angle. Peeling is performed during this rotation of the peeler shaft. At this time, as a result of the contact positional relationship between the fruit or vegetable K supported by the fruit and vegetable holder 131 and the peeler main body 202 of the peeler driving mechanism at the peeling position being prescribed, as shown in Fig. 21, the skin of the peeled fruit or vegetable K drops below the peeling device by its own weight, without becoming wrapped around the fruit and vegetable holder 131 or the fruit or vegetable K. In addition, during this time, the rotation angle difference between the center shaft 208 and the peeler shaft 205 remain unchanged. Therefore, the state (pressure) in which the peeler main body 202 is in contact with the fruit or vegetable K remains unchanged. The second angle refers to a movement angle (peeling range) on a rotation trajectory (circular arc) of the peeler main body 202 in a state in which the peeler main body 202 is in contact with the fruit or vegetable K. The initial contact position of the peeler blade 202A to the fruit or vegetable and an angular position of the end of peeling that serve as a peeling range can be arbitrarily set by a switch in the operating unit 104 or the like.

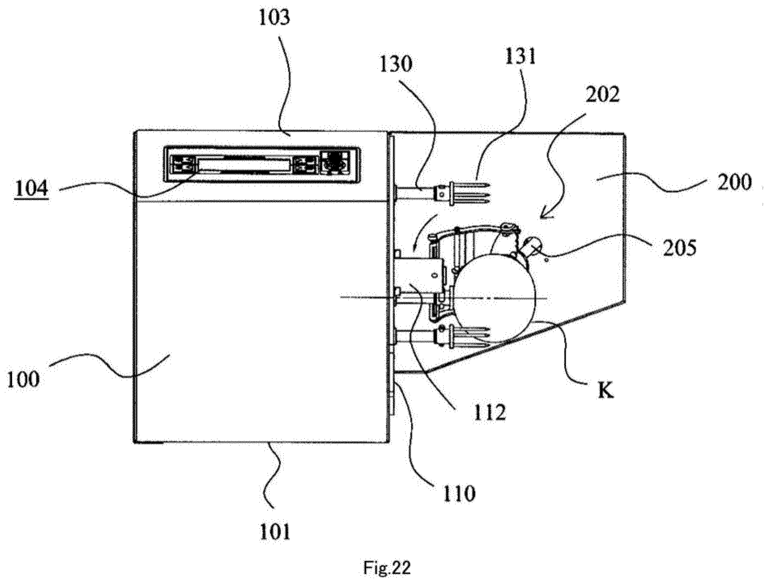

When rotation by the second angle is completed, the control unit controls the driving of the holder motor 140 and stops the rotation of the fruit and vegetable holder 131. Then, the control unit drives the shaft rotation motor 207 and reverse-rotates the center shaft 20 by the first angle in advance. As a result, the contact with the fruit and vegetable K by the peeler main body 202 is released. Then, as shown in Fig. 22, the control unit drives the peeler rotation motor 204 and the shaft rotation motor 207, synchronously reverse-rotates the center shaft 208 and the peeler shaft 205 by the second angle, and returns the center shaft 208 and the peeler shaft 205 to the driving standby position.

At this time, because the fruit and vegetable holder 131 extends horizontally from the vertical rotation disk 110, the peeled skin can be recovered and discarded without collecting on a horizontal rotation disk. In addition, even should juice drip from the fruit or vegetable, the juice does not become attached to mechanisms that rotate the vertical rotation disk 110 and the fruit and vegetable holder 131 and the like. Therefore, problems such as inhibition of rotation-driving and deterioration of hygiene caused by the juice do not easily occur.

As described above, when the proximity sensor 172 cannot detect the pressing of the fruit or vegetable K against the fruit and vegetable holder 131 upon the ON operation of the driving switch in the operating unit 104, the control unit performs control to stop the operation of the peeler main body 20 from the driving standby position and rotates only the vertical rotation disk 110.

In addition, at the recovery position for the fruit or vegetable K, with the detection by the second sensor 126B that the fruit and vegetable holders 131 have stopped at the predetermined stop positions as a trigger, the control unit drives the ejection motor 150 of the fruit and vegetable ejection mechanism, and advances and retreats the stage block 164 once by the crank 155. When the stage block 164 is advanced from the base portion periphery of the fruit and vegetable holder 131 to the tip end side of the fruit and vegetable pins 131C, the rotation piece 168 that positions the fruit and vegetable holder 131 in the fruit and vegetable holder placement portion 158A comes into contact with the peeled fruit or vegetable K from the base portion side of the fruit and vegetable pins 131C and pushes the fruit or vegetable K towards the tip end side of the fruit and vegetable pins 131C. As a result, the fruit or vegetable K is removed from the fruit and vegetable pins 131C, directly drops to the slope 3 attached to the mount 2 by its own weight, and is sent down the slope 3, thereby being recovered. The device according to the present embodiment uses the fruit and vegetable holder 131 that extends horizontally from the vertical rotation disk 110. As a result, the fruit or vegetable K that has been peeled and released from support drops downward at all times. Therefore, recovery is facilitated. In addition, as a result of the recovery position for the fruit or vegetable K being provided below the disk surface 110A of the vertical rotation disk 110, and the slope 3 being provided directly therebelow, the drop distance can be set such as to be short. Bruising and scratching caused by the fruit or vegetable K dropping can be prevented to the greatest possible extent.

The amount of time required for the single advance and retreat of the stage block 164 using the crank 155 at this time is within the amount of time required for peeling at the peeling position. In addition, while the peeling of the fruit or vegetable K is being performed at the peeling position and ejection of the fruit or vegetable K is being performed at the recovery position, at the attachment position, the worker pierces the fruit or vegetable K to be peeled with the fruit and vegetable pins 131C of the fruit and vegetable holder 131 that has been carried to the attachment position, on the virtual center axis of the fruit or vegetable K. In the peeling mechanism, when a detection is made that the peeler main body 202 has returned to the driving standby position for peeling after the completion of peeling, the ON operation of the drive switch becomes possible. Therefore, the worker turns ON the operation switch.

In this way, as a result of the peeling device according to the present embodiment, peeling and recovery of the fruit or vegetable K can be continuously performed, safely and with ease, as a result of the worker repeatedly attaching the fruit and vegetable K at the peeling position and turning ON the operating switch.

The present invention is not limited to the above-described embodiment, and various modifications are possible to an extent that characteristics of the present invention are not compromised.

For example, the support portion for the fruit or vegetable K of the fruit and vegetable holder is not limited to the configuration in which the fruit and vegetable pins are provided. For example, the configuration may be such that a suction device is provided in each fruit and vegetable holder, and the fruit or vegetable K is suctioned to the fruit and vegetable holder and held, from the attachment position to the recovery position. In this case, the fruit and vegetable ejection mechanism provided at the recovery position can be omitted.

In addition, according to the present embodiment, there are three work positions, that is, the attachment position for the fruit or vegetable K, the peeling position, and the recovery position for the fruit or vegetable K. However, there need not be three work positions. For example, a work position for performing pre-processing for peeling may be provided between the attachment position for the fruit or vegetable K and the peeling position, thereby resulting in four work positions. In this case, the arrangement of the rotation restriction plate and the like are adjusted such that the interval between the fruit and vegetable holders is 90 degrees, and the angle of a single rotation of the vertical rotation disk is 90 degrees.

Furthermore, as long as the stage advancing/retreating means is capable of moving the upper surface of the rotation piece of the stage block back and forth between at least the base portion and the tip end portion of the longest pin in the fruit and vegetable holder, the configuration is not limited to that in which the stage block is advanced and retreated using the crank, as according to the present embodiment.

According to the present embodiment, in the stage block, the stage main body is configured such as to swing in the vertical direction between the position at which the stage main body partially overlaps the vertical rotation disk and the position at which the stage main body does not overlap the vertical rotation disk when viewed opposing the vertical rotation disk in relation to the base. However, the swing direction may be a horizontal direction.

Furthermore, the configuration of the fruit and vegetable detection mechanism is not limited to that according to the present embodiment. For example, detection of the support of the fruit or vegetable is not limited to the method in which the proximity sensor is used. The method also does not need to be that in which the detection is made regarding whether or not the rear end of the holder rotation shaft that is formed such as to have a small diameter is protruding. In addition, the detection result of the fruit and vegetable detection mechanism may be used not only for control of the driving of the peeler main body of the peeler mechanism as according to the present embodiment, but also for control that completely omits rotation of the holder rotation shaft of the fruit and vegetable holder, and driving of the peeler rotation motor of the peeler main body and the shaft rotation motor when the fruit and vegetable holder is carried to the peeling position. At the recovery position, an issue such as buffering between the fruit and vegetable holder and the peeler blade at the peeling position does not arise. However, in a similar manner, the detection result of the fruit and vegetable detection mechanism can also be used at the recovery positon for control that completely omits driving of the ejection mechanism.

A peeling device in which maintenance can be easily performed with a simple configuration, and attachment of a fruit or vegetable to the peeling device, peeling, and recovery are easily, safely, and reliably performed is provided.

The peeling device includes: a vertical rotation disk 110 that is provided in a rotation shaft that extends horizontally; a plurality of fruit and vegetable holders 131 that are rotatably provided around a rotation axis of the vertical rotation disk 110 and each support a fruit or vegetable K in a support portion 131C that extends from a disk surface 110A of the vertical rotation disk 110; and a peeler main body 202 that moves along an axial direction of the fruit or vegetable K in a state in which a peeler blade 202A is pressed against the fruit or vegetable K. The vertical rotation disk 110 is rotated, and the fruit and vegetable holders 131 are successively intermittently carried to a plurality of work positions including an attachment position for the fruit or vegetable K, a peeling position, and a recovery position. At the peeling position, the fruit or vegetable K is rotated by the fruit and vegetable holder 131 being rotated, and full-periphery peeling by the peeler blade 202A is performed by the peeler main body 202 moving along the axial direction of the fruit or vegetable K.

## Claims

1. A peeling device comprising:
a vertical rotation disk (110) that is rotatably provided such as to be freely attached to and detached from a rotation shaft (114) that is provided such as to extend horizontally;
a plurality of fruit and vegetable holders (131) that are each rotatably provided around a rotation axis of the vertical rotation disk (110), and each being configured to support a fruit or vegetable (K) by a support portion (131C) that is configured to extend vertically in relation to the vertical rotation disk (110); and
a peeler main body (202) that is movably supported by a peeler arm (201) along an axial direction of the fruit or vegetable (K) that is supportable by the fruit and vegetable holder (131) in a state in which a peeler blade (202A) is pressable against the fruit or vegetable (K), **characterized in that**
the vertical rotation disk (110) is configured to be rotated and the fruit and vegetable holders (131) are configured to be successively intermittently carried to a plurality of work positions including an attachment position for the fruit or vegetable (K), a peeling position, and a recovery position for the fruit or vegetable (K) provided on a rotation movement path of the vertical rotation disk (110), and
at the peeling position, as a result of the carried fruit and vegetable holder (131) being rotated, the supportable fruit or vegetable (K) is rotatable and full-periphery peeling by the peeler blade (202A) is performed by the peeler main body (202) being configured to move along the axial direction of the fruit or vegetable (K).

2. The peeling device according to claim 1, **characterized in that**:
a rotational force receiving gear (135) to which driving force for rotating the fruit and vegetable holder (131) is transmitted is provided in a holder rotation shaft (130) of the fruit and vegetable holder (131);
at the peeling position, a holder motor (140) configured to rotate the fruit and vegetable holder (131) and a rotational force imparting gear (145) configured to transmit rotational driving force of the holder motor (140) are provided; and
the rotational force receiving gear (135) and the rotational force imparting gear (145) are configured to mesh with each other when the fruit and vegetable holder (131) is carried to the peeling position.

3. The peeling device according to claim 2, **characterized in that**:
the holder motor (140) is controlled such that a rotation speed at the start of peeling is higher than a rotation speed during peeling.

4. The peeling device according to any one of claims 1 to 3, **characterized in that**:
the support portion (131C) of the fruit and vegetable holder (131) is provided with a single or a plurality of sharp pins (131C) configured to pierce and support the fruit or vegetable (K) on an upper surface of a holder main body (131A); and
at the recovery position for the fruit or vegetable (K), a fruit and vegetable ejection mechanism is provided, the fruit and vegetable ejection mechanism including a stage block (164) that includes a rotation piece (168) of which one end in a longitudinal direction is configured to be pivotally supported to a stage main body (167), and that is capable of rotating in parallel with a top surface (167A) of the stage main body (167), is configured to be urged at all times in a rotational axis direction of the vertical rotation disk (110), and in which a semicircular notched fruit and vegetable holder placement portion (168A) in which the holder main body (131A) of the fruit and vegetable holder (131) that has stopped at the recovery position for the fruit or vegetable (K) is positioned in a state of being urged in the rotational axis direction of the vertical rotation disk (110) is formed, and a stage advancing/retreating means (155) configured to advance and retreat the stage block (164) such that the rotation piece (168) is capable of moving back and forth between at least a base portion and a tip portion of the pin (131C) in the fruit and vegetable holder (131).

5. The peeling device according to claim 4, **characterized in that**:
the stage block (164) is provided such as to freely swing between a position at which the stage main body (167) that is provided with the rotation piece (168) partially overlaps the vertical rotation disk (110) and a position at which the stage main body (167) does not overlap the vertical rotation disk (110) when viewed opposing the vertical rotation disk (110) in relation to a base that is provided in the stage advancing/retreating means (155).

6. The peeling device according to any one of claims 1 to 5, **characterized in that**:
a sensor (126) configured to determine whether or not the fruit or vegetable (K) is attached to the fruit and vegetable holder (131) is provided at the attachment position for the fruit or vegetable (K), and when a detection is made that the fruit or vegetable (K) is not attached, control is performed such that the peeler blade (202A) is not driven when the fruit and vegetable holder (131) is carried to the peeling position.

## Patentansprüche

1. Schälvorrichtung, mit:
einer vertikalen Drehscheibe (110), die drehbar vorgesehen ist, um an und von einer Drehwelle (114) frei befestigt und gelöst zu werden, die vorgesehen ist, um sich horizontal zu erstrecken;
einer Vielzahl von Frucht- und Gemüsehaltern (131), die jeweils drehbar um eine Drehachse der vertikalen Drehscheibe (110) vorgesehen sind, und wobei jeder eingerichtet ist, eine Frucht oder ein Gemüse (K) durch einen Stützabschnitt (131C) zu stützen, der eingerichtet ist, sich bezüglich der vertikalen Drehscheibe (110) vertikal zu erstrecken; und
einem Schälerhauptkörper (202), der durch einen Schälerarm (201) entlang einer Axialrichtung der Frucht oder des Gemüses (K), die/das durch den Frucht- und Gemüsehalter (131) stützbar ist, in einem Zustand bewegbar gestützt ist, in dem ein Schälermesser (202A) gegen die Frucht oder das Gemüse (K) pressbar ist, **dadurch gekennzeichnet, dass**
die vertikale Drehscheibe (110) eingerichtet ist, gedreht zu werden, und die Frucht- und Gemüsehalter (131) eingerichtet sind, um nacheinander mit Unterbrechungen zu einer Vielzahl von Arbeitspositionen getragen zu werden, die eine Befestigungsposition für die Frucht oder das Gemüse (K), eine Schälposition, sowie eine Einholposition für die Frucht oder das Gemüse (K) umfassen, die an einem Drehbewegungspfad der vertikalen Drehscheibe (110) vorgesehen sind, und
an der Schälposition infolgedessen, dass der getragene Frucht- und Gemüsehalter (131) gedreht wird, die/das stützbare Frucht oder Gemüse (K) drehbar ist und ein Voll-Umfangsschälen durch das Schälermesser (202A) durchgeführt wird, indem der Schälerhauptkörper (202) eingerichtet ist, sich entlang der Axialrichtung der Frucht oder des Gemüses (K) zu bewegen.

2. Schälvorrichtung nach Anspruch 1, **dadurch gekennzeichnet, dass**:
ein Drehkraftaufnahmezahnrad (135), auf das eine Antriebskraft zum Drehen des Frucht- und Gemüsehalters (131) übertragen wird, an einer Halterdrehwelle (130) des Frucht- und Gemüsehalters (131) vorgesehen ist;
an der Schälposition ein Haltermotor (140), der eingerichtet ist, den Frucht- und Gemüsehalter (131) zu drehen, sowie ein Drehkraftabgabezahnrad (145) vorgesehen sind, das eingerichtet ist, eine Drehantriebskraft des Haltermotors (140) zu übertragen; und
das Drehkraftaufnahmezahnrad (135) und das Drehkraftabgabezahnrad (145) eingerichtet sind, miteinander zu kämmen, wenn der Frucht- und Gemüsehalter (131) zu der Schälposition getragen wird.

3. Schälvorrichtung nach Anspruch 2, **dadurch gekennzeichnet, dass**:
der Haltermotor (140) so gesteuert wird, dass eine Drehzahl bei dem Beginn eines Schälens höher ist als eine Drehzahl während eines Schälens.

4. Schälvorrichtung nach einem der Ansprüche 1 bis 3, **dadurch gekennzeichnet, dass**:
der Stützabschnitt (131C) des Frucht- und Gemüsehalters (131) mit einem einzelnen oder einer Vielzahl von scharfen Stiften (131C) versehen ist, der/die eingerichtet ist/sind, die Frucht oder das Gemüse (K) auf einer oberen Fläche eines Halterhauptkörpers (131A) zu stechen und zu stützen; und
an der Einholposition für die Frucht oder das Gemüse (K) ein Frucht- und Gemüseauswurfmechanismus vorgesehen ist, wobei der Frucht- und Gemüseauswurfmechanismus einen Stufenblock (164) umfasst, der einen Drehteil (168) umfasst, dessen ein Ende in einer Längsrichtung eingerichtet ist, an einem Stufenhauptkörper (167) schwenkbar gestützt zu sein, und der imstande ist, parallel zu einer oberen Fläche (167A) des Stufenhauptkörpers (167) zu drehen, der eingerichtet ist, immer in einer Drehachsenrichtung der vertikalen Drehscheibe (110) gedrängt zu werden, und in dem ein halbkreisförmig eingekerbter Frucht- und Gemüsehalteranordnungsabschnitt (168A), in dem der Halterhauptkörper (131a) des Frucht- und Gemüsehalters (131), der an der Einholposition für die Frucht oder das Gemüse (K) gestoppt hat, in einem Zustand angeordnet ist, in dem er in der Drehachsenrichtung der vertikalen Drehscheibe (110) gedrängt ist, ausgebildet ist, sowie ein Stufenvorschub-/-rückzugsmittel (155), das eingerichtet ist, den Stufenblock (164) so vorzuschieben und zurückzuziehen, dass der Drehteil (168) imstande ist, sich zwischen mindestens einem Basisabschnitt und einem Spitzenabschnitt des Stifts (131C) in dem Frucht- und Gemüsehalter (131) rückwärts und vorwärts zu bewegen.

5. Schälvorrichtung nach Anspruch 4, **dadurch gekennzeichnet, dass**:
der Stufenblock (164) vorgesehen ist, um zwischen einer Position, an der der Stufenhauptkörper (167), der mit dem Drehteil (168) versehen ist, die vertikale Drehscheibe (110) teilweise überlappt, und einer Position frei zu schwingen, an der der Stufenhauptkörper (167) die vertikale Drehscheibe (110), die vertikale Drehscheibe (110) bezüglich einer Basis, die in dem Stufenvorschub-/-rückzugsmittel (155) vorgesehen ist, gegenüberliegend betrachtend, nicht überlappt.

6. Schälvorrichtung nach einem der Ansprüche 1 bis 5, **dadurch gekennzeichnet, dass**:
ein Sensor (126), der eingerichtet ist zu bestimmen, ob die Frucht oder das Gemüse (K) an dem Frucht- und Gemüsehalter (131) befestigt ist, an der Befestigungsposition für die Frucht oder das Gemüse (K) vorgesehen ist, und wobei, wenn eine Bestimmung erfolgt, dass die Frucht oder das Gemüse (K) nicht befestigt ist, eine Steuerung durchgeführt wird, sodass das Schälermesser (202A) nicht angetrieben wird, wenn der Frucht- und Gemüsehalter (131) zu der Schälposition getragen wird.

## Revendications

1. Dispositif d'épluchage comprenant :
un disque de rotation vertical (110) qui est prévu en rotation afin d'être librement fixé à et détaché d'un arbre de rotation (114) qui est prévu afin de s'étendre horizontalement ;
une pluralité de supports de fruit et de légume (131) qui sont chacun prévus en rotation autour d'un axe de rotation du disque de rotation vertical (110), et chacun étant configuré pour supporter un fruit ou un légume (K) par une partie de support (131C) qui est configurée pour s'étendre verticalement par rapport au disque de rotation vertical (110) ; et
un corps principal de dispositif d'épluchage (202) qui est supporté, de manière mobile, par un bras de dispositif d'épluchage (201) le long d'une direction axiale du fruit ou du légume (K) qui peut être supporté par le support de fruit et de légume (131) dans un état dans lequel une lame d'épluchage (202A) peut être comprimée contre le fruit ou le légume (K), **caractérisé en ce que** :
le disque de rotation vertical (110) est configuré pour être entraîné en rotation et les supports de fruit de légume (131) sont configurés pour être successivement portés, de manière intermittente, dans une pluralité de positions de travail comprenant une position de fixation pour le fruit ou le légume (K), une position d'épluchage et une position de récupération pour le fruit ou le légume (K) prévue sur une trajectoire de déplacement de rotation du disque de rotation vertical (110), et
dans la position d'épluchage, suite à la rotation du support de fruit et de légume porté (131), le fruit ou le légume (K) pouvant être supporté est mobile en rotation et l'épluchage sur toute la périphérie par la lame d'épluchage (202A) est réalisé par le corps principal de dispositif d'épluchage (202) qui est configuré pour se déplacer le long de la direction axiale du fruit ou du légume (K).

2. Dispositif d'épluchage selon la revendication 1, **caractérisé en ce que** :
l'engrenage de réception de force de rotation (135) auquel la force d'entraînement pour faire tourner le support de fruit et de légume (131) est transmise, est prévu dans un arbre de rotation de support (130) du support de fruit et de légume (131) ;
dans la position d'épluchage, un moteur de support (140) configuré pour faire tourner le support de fruit et de légume (131) et un engrenage de communication de force de rotation (145) configuré pour transmettre une force d'entraînement rotative du moteur de support (140) sont prévus ; et
l'engrenage de réception de force de rotation (135) et l'engrenage de communication de force de rotation (145) sont configurés pour s'engrener entre eux lorsque le support de fruit et de légume (131) est porté dans la position d'épluchage.

3. Dispositif d'épluchage selon la revendication 2, **caractérisé en ce que** :
le moteur de support (140) est commandé de sorte qu'une vitesse de rotation au début de l'épluchage est supérieure à une vitesse de rotation pendant l'épluchage.

4. Dispositif d'épluchage selon l'une quelconque des revendications 1 à 3, **caractérisé en ce que** :
la partie de support (131C) du support de fruit et de légume (131) est prévue avec une seule ou une pluralité de pointes pointues (131C) configurées pour percer et supporter le fruit ou le légume (K) sur une surface supérieure d'un corps principal de support (131A) ; et
dans la position de récupération pour le fruit ou le légume (K), on prévoit un mécanisme d'éjection de fruit et de légume, le mécanisme d'éjection de fruit et de légume comprenant un bloc d'étage (164) qui comprend une pièce de rotation (168) dont une extrémité, dans une direction longitudinale, est configurée pour être supportée de manière pivotante sur un corps principal d'étage (167), et qui est capable de tourner parallèlement à une surface supérieure (167A) du corps principal d'étage (167), est configurée pour être poussée à tout moment dans une direction d'axe de rotation du disque de rotation vertical (110), et dans laquelle une partie de mise en place de support de fruit et de légume crantée semi-circulaire (168A) dans laquelle le corps principal de support (131A) du support de fruit et de légume (131) qui s'est arrêté dans la position de récupération pour le fruit ou le légume (K), est positionnée dans un état dans lequel elle est poussée dans la direction d'axe de rotation du disque de rotation vertical (110) et un moyen d'avancement / recul d'étage (155) configuré pour faire avancer et reculer le bloc d'étage (164) de sorte que la pièce de rotation (168) peut se déplacer en avant et en arrière entre au moins une partie de base et une partie de pointe de la pointe (131C) dans le support de fruit et de légume (131).

5. Dispositif d'épluchage selon la revendication 4, **caractérisé en ce que** :
le bloc d'étage (164) est prévu afin d'osciller librement entre une position dans laquelle le corps principal d'étage (167) qui est prévu avec la pièce de rotation (168) recouvre partiellement le disque de rotation vertical (110) et une position dans laquelle le corps principal d'étage (167) ne recouvre pas le disque de rotation vertical (110) lorsqu'il est observé à l'opposé du disque de rotation vertical (110) par rapport à une base qui est prévue dans le moyen d'avancement / recul d'étage (155).

6. Dispositif d'épluchage selon l'une quelconque des revendications 1 à 5, **caractérisé en ce que** :
un capteur (126) configuré pour déterminer si le fruit ou le légume (K) est fixé ou pas au support de fruit et de légume (131), est prévu dans la position de fixation pour le fruit ou le légume (K), et lorsqu'une détection est réalisée que le fruit ou le légume (K) n'est pas fixé, la commande est réalisée de sorte que la lame d'épluchage (202A) n'est pas entraînée lorsque le support de fruit et de légume (131) est porté dans la position d'épluchage.
